# EUROPEAN PATENT APPLICATION

(11) **EP 4 729 685 A1**
(43) Date of publication of application: **22.04.2026**
(21) Application number: 24854256.5
(22) Date of filing: 26.04.2024
(51) Int. Cl.: D06F 58/22, B01D 35/16, B01D 33/46, B01D 33/80, D06F 105/34

(54) **LINT CLEANING DEVICE AND CLOTHING CARE DEVICE INCLUDING SAME**

(30) Priority: 14.08.2023 KR 20230106068
(71) Applicant: Samsung Electronics Co., Ltd., Suwon-si, Gyeonggi-do 16677 (KR)
(72) Inventor: IM, Hyeongyu, Suwon-si Gyeonggi-do 16677 (KR); YANG, Byoungyull, Suwon-si Gyeonggi-do 16677 (KR)
(74) Representative: Gulde & Partner
(86) International application number: PCT/KR2024/005705
(87) International publication number: WO 2025/037702

(57) **Abstract**

A clothing care device according to an embodiment may comprise: a clothing accommodation part for accommodating clothing; and a lint cleaning device coupled with a filter member and configured to clean lint filtered on the surface of the filter member. The lint cleaning device may comprise: a brush having a front end portion provided to rotate between a first position and a second position along the inner circumferential surface of the filter member; a lint storage box provided to accommodate lint removed by the brush; a chamber door provided to open/close the lint storage box; one driving unit configured to rotate the brush; and an operation assembly configured to move the chamber door in response to an operation of the driving unit.

## Description

### [Technical Field]

Various embodiments of the disclosure relate to a lint cleaning device and a clothing treatment device including the same.

### [Background Art]

A clothing treatment device is a device that is configured to dry laundry by rotating a drum containing drying items, such as clothing, towels, blankets, by supplying hot air into the drum. Clothing treatment devices may be classified into two types - condensing clothing treatment devices (or circulating clothing treatment devices) and exhausting clothing treatment devices, depending on how the humidity absorbed from the drying items is processed.

In the condensing clothing treatment device, humid air (or humidity) may be formed by exchanging heat with item(s) to be dried (e.g., clothes, towels, or shoes) in the drum, and a such humid air gets circulated within the device without being discharged to the outside. The heat exchanger of the clothing treatment device processes the humid air to make condensate which then gets discharged to the outside of the device. In contrast, the exhausting clothing treatment device may perform heat exchange process on the item(s) to be dried in the drum, resulting in humid air being formed which gets discharged directly from the drum to the outside of the clothing treatment device through the exhaust duct.

### [Disclosure of Invention]

### [Solution to Problem]

Various embodiments of the disclosure may include a lint cleaning device structure capable of automatically cleaning the lint, filtered through a filter.

Various embodiments of the disclosure may provide a structure for preventing lint from being swept in an unintended direction when cleaning the lint, filtered through the filter.

According to an example embodiment, a clothing treatment device includes a clothes receiving unit for receiving clothes; and a lint cleaning device configured to couple with a filter member and configured to clean lint filtered on a surface of the filter member, wherein the lint cleaning device includes a brush disposed so that a tip portion of the brush rotates between a first position and a second position along an inner circumferential surface of the filter member, a lint chamber disposed to receive the lint removed by the brush, an chamber door disposed to open or close the lint chamber, a driver configured to rotate the brush, and an operation assembly configured to move the chamber door in response to an operation of the driver.

According to an example embodiment, the operation assembly may include a cam coupled to the driver, and including a first pressing protrusion, a second pressing protrusion spaced apart from the first pressing protrusion in a circumferential direction, and a recess between the first pressing protrusion and the second pressing protrusion, a lever including a lever protrusion protruding radially outward and rotated as the lever protrusion is pressed by the first pressing protrusion or the second pressing protrusion during movement of the cam, and a latch configured to rotate in response to rotation of the lever to thereby rotate the chamber door to open and close the lint chamber.

According to an example embodiment, the lever protrusion of the lever may be configured to be positioned on the first pressing protrusion when the brush is at the first position.

According to an example embodiment, when the driver is rotated in a first direction so that the brush is rotated from the first position to the second position, the lever may be rotated in a second direction opposite to the first direction as the lever protrusion of the lever passes through the recess and is pressed by the second pressing protrusion. The latch may be configured to rotate in response to the rotation of the lever to thereby rotate the chamber door to open the lint chamber.

According to an example embodiment, when the driver is rotated in a second direction so that the brush is rotated from the second position to the first position, the lever may be rotated in a first direction opposite to the second direction as the lever protrusion of the lever is pressed by the second pressing protrusion. The latch may be configured to rotate in response to the rotation of the lever to thereby rotate the chamber door to close the lint chamber.

According to an example embodiment, the lint cleaning device may include a case configured to receive the brush, the lint chamber, and the chamber door. The operation assembly may include a first spring disposed between the lever and the case to apply a force to the lever in a direction in which the chamber door is rotated to close the lint chamber.

According to an example embodiment, the operation assembly may include a second spring disposed between the latch and the case.

According to an example embodiment, an elastic modulus of the first spring may be smaller than an elastic modulus of the second spring.

According to an example embodiment, a radius of the first pressing protrusion and a radius of the second pressing protrusion may be substantially equal.

According to an example embodiment, the tip portion of the brush may include rubber or an elastic material.

According to an example embodiment, the lint cleaning device may be configured to move the lint removed from the filter member toward the lint chamber as the brush is rotated from the first position to the second position.

According to an example embodiment, the brush may be rotated in a first direction from the first position to the second position, and the chamber door may be rotated to open the lint chamber, in response to rotation of the driver in the first direction. The chamber door may be rotated so that the lint chamber is opened before the brush reaches the second position.

According to an example embodiment, the brush may be rotated in a second direction from the second position to the first position, and the chamber door may be rotated to close the lint chamber, in response to rotation of the driver in the second direction which is opposite to the first direction. The chamber door may be rotated so that the lint chamber is closed before the brush reaches the first position.

According to an example embodiment example, the lint cleaning device may be disposed under the clothes receiving unit, and configured to be modular so as to slide into, and slide out of, the clothes receiving unit.

According to an example embodiment, the lint cleaning device may include a case configured to receive the brush, the lint chamber, and the chamber door.

According to an example embodiment, the lint chamber may be configured to slide into, and slide out from, the case.

According to an example embodiment, a lint cleaning device includes a case; a filter mounting portion configured to mount a filter member; a brush disposed so that a tip portion of the brush rotates between a first position and a second position along an inner circumferential surface of the filter member in the case; a lint chamber disposed to receive lint removed by the brush; an chamber door disposed to open or close the lint chamber; a driver configured to rotate the brush; and an operation assembly configured to transfer rotational power to the brush and the chamber door in response to an operation of the driver.

According to an example embodiment, the driver may include a driving shaft. The operation assembly may include a cam coupled to the driving shaft, and including a first pressing protrusion, a second pressing protrusion spaced apart from the first pressing protrusion in a circumferential direction, and a recess between the first pressing protrusion and the second pressing protrusion, a lever including a lever protrusion protruding radially outward and rotated as the lever protrusion is pressed by the first pressing protrusion or the second pressing protrusion during movement of the cam, and a latch configured to rotate in response to rotation of the lever to thereby rotate the chamber door to open and close the lint chamber.

According to an example embodiment, when the driver is rotated in a first direction so that the brush is rotated from the first position to the second position, the lever may be rotated in a second direction opposite to the first direction as the lever protrusion of the lever passes through the recess and is pressed by the second pressing protrusion. The latch may be configured to rotate in response to the rotation of the lever to thereby rotate the chamber door to open the lint chamber.

According to an example embodiment, when the driver is rotated in a second direction so that the brush is rotated from the second position to the first position, the lever may be rotated in a first direction opposite to the second direction as the lever protrusion of the lever is pressed by the second pressing protrusion. The latch may be configured to rotate in response to the rotation of the lever to thereby rotate the chamber door to close the lint chamber.

According to an example embodiment, a clothing treatment device includes a clothes receiving unit for receiving clothes; a lint cleaning device coupled with a filter member and configured to clean lint filtered on a surface of the filter member, wherein the lint cleaning device includes a case, a brush received in the case and disposed to rotate between a first position and a second position, and a driver configured to rotate the brush, and wherein the brush is configured so that a tip portion the brush is adjacent to the filter member while rotating from the first position to the second position and the tip portion of the brush is spaced apart from the filter member while rotating from the second position to the first position.

According to an example embodiment, the brush may have a first swing radius while being rotated from the first position to the second position. The brush may have a second swing radius while being rotated from the second position to the first position. The first swing radius may be larger than the second swing radius.

According to an example embodiment, the case may include a guide rail on a wall surface of the case, the guide rail including a first path, and a second path different from the first path. The brush may include a guide protrusion protruding from a lateral side of the brush and configured to move along the guide rail while the brush is being rotated.

According to an example embodiment, the guide protrusion may be configured to move along the first path while the brush is rotated from the first position to the second position, and to move along the second path while the brush is rotated from the second position to the first position.

According to an example embodiment, the brush may include a spring disposed in a space inside the guide protrusion in a recess formed in the lateral side of the brush and from which the guide protrusion protrudes, the spring configured to bias the guide protrusion into the guide rail.

According to example an embodiment, the first path may be positioned radially outside the second path.

According to example an embodiment, the guide rail may include a first connecting portion connecting the first path with the second path at a position adjacent to the brush while the brush is in the first position, and a second connecting portion connecting the first path with the second path at a position adjacent to the brush while the brush is in the second position.

According to an example embodiment, each of the first connecting portion and the second connecting portion may have a step at a boundary dividing the first path and the second path.

According to an example embodiment, in the first connecting portion, the second path may be stepped further upward than the first path.

According to an example embodiment, in the second connecting portion, the first path may be stepped further upward than the second path.

According to an example embodiment, the first path may be inclined upward along a direction in which the brush moves from the first position to the second position.

According to an example embodiment, the second path may be inclined upward along a direction in which the brush moves from the second position to the first position.

According to an example embodiment, the lint cleaning device may include a shaft that is rotatable by the driver. The brush may include a shaft hole through which the shaft passes. The shaft hole may be configured such that the shaft is movable along one lateral direction with respect to the shaft hole.

According to an example embodiment, the lint cleaning device may be configured to vary a rotational axis or swing radius of the brush according to a position of the shaft along the one lateral direction in the shaft hole.

According to example an embodiment, the guide rail may be disposed within a moving range in which the brush moves between the first position and the second position.

According to an example embodiment, a lint cleaning device includes a case including a filter mounting portion configured to mount a filter member; a brush received in the case and disposed to rotate between a first position and a second position; and a driver configured to rotate the brush, wherein the brush is configured so that a tip portion of the brush contacts the filter member while rotating from the first position to the second position and the tip portion of the brush is spaced apart from the filter member while rotating from the second position to the first position.

According to an example embodiment, the brush may have a first swing radius while being rotated from the first position to the second position. The brush may have a second swing radius while being rotated from the second position to the first position. The first swing radius may be larger than the second swing radius.

According to an example embodiment, the case may include a guide rail on a wall surface of the case, the guide rail including a first path, and a second path positioned radially inside the first path. The brush may include a guide protrusion inserted into a recess formed in a lateral side of the brush so as to partially protrude, the guide protrusion configured to move along the guide rail while the brush is being rotated.

According to an example embodiment, the guide protrusion may be configured to move along the first path while the brush is rotated from the first position to the second position, and to move along the second path while the brush is rotated from the second position to the first position.

According to an example embodiment, the guide rail may include a first connecting portion connecting the first path with the second path at a position adjacent to the brush while the brush is in the first position, and a second connecting portion connecting the first path with the second path at a position adjacent to the brush while the brush is in the second position. In the first connecting portion, a boundary between the first path and the second path may be configured so that the second path is stepped further upward than the first path. In the second connecting portion, a boundary between the first path and the second path may be configured so that the first path is stepped further upward than the second path.

According to various embodiments of the disclosure, a clothing treatment device may have a structure capable of preventing lint from moving to an unintended place in a lint cleaning device cleaning lint filtered through a filter.

According to various embodiments of the disclosure, a clothing treatment device may have a structure capable of preventing lint from escaping from a lint chamber for storing lint cleaned by a lint cleaning device to contaminate the inside.

Effects of the disclosure are not limited to the foregoing, and other unmentioned effects would be apparent to one of ordinary skill in the art from the following description. In other words, unintended effects in practicing embodiments of the disclosure may also be derived by one of ordinary skill in the art from the embodiments of the disclosure.

### [Brief Description of Drawings]

FIG. 1 is a perspective view illustrating a clothing treatment device according to an embodiment;
FIG. 2 is a cross-sectional view schematically illustrating a clothing treatment device according to an embodiment;
FIG. 3 is a view conceptually illustrating an air circulation path of air circulating inside and outside the drum of the clothing treatment device of FIG. 2 and a refrigerant circulation path of the heat changer;
FIG. 4A and FIG. 4B are views illustrating a state in which a lint cleaning device is provided in a clothing treatment device according to an embodiment;
FIG. 5 is a perspective view illustrating a lint cleaning device according to an embodiment;
FIG. 6 is an exploded perspective view illustrating a lint cleaning device according to an embodiment;
FIG. 7 is a view illustrating an upper portion of a lint cleaning device according to an embodiment;
FIG. 8 is a view illustrating a lower portion of a lint cleaning device according to an embodiment;
FIG. 9A to FIG. 9E are views illustrating mutual operations of an operation assembly according to an embodiment;
FIG. 10A to FIG. 10D are views illustrating operations of a lint cleaning device according to an embodiment;
FIG. 11 is a perspective view illustrating a lint cleaning device according to an embodiment;
FIG. 12 is an exploded perspective view illustrating the brush and the shaft illustrated in FIG. 11;
FIG. 13 is a view illustrating the brush and the shaft of FIG. 11;
FIG. 14 is a view illustrating a guide rail structure of a lint cleaning device according to an embodiment;
FIG. 15 is a graph illustrating an inclined structure of a guide rail of a lint cleaning device according to an embodiment;
FIG. 16A to FIG. 16D are views illustrating operations of a lint cleaning device according to an embodiment;
FIG. 17 is a perspective view illustrating a lint cleaning device according to an embodiment;
FIG. 18 is an exploded perspective view illustrating a lint cleaning device according to an embodiment; and
FIG. 19A to FIG. 19D are views illustrating operations of a lint cleaning device according to an embodiment.

Reference may be made to the accompanying drawings in the following description, and specific examples that may be practiced are shown as examples within the drawings. Other examples may be utilized and structural changes may be made without departing from the scope of the various examples.

### [Mode for the Invention]

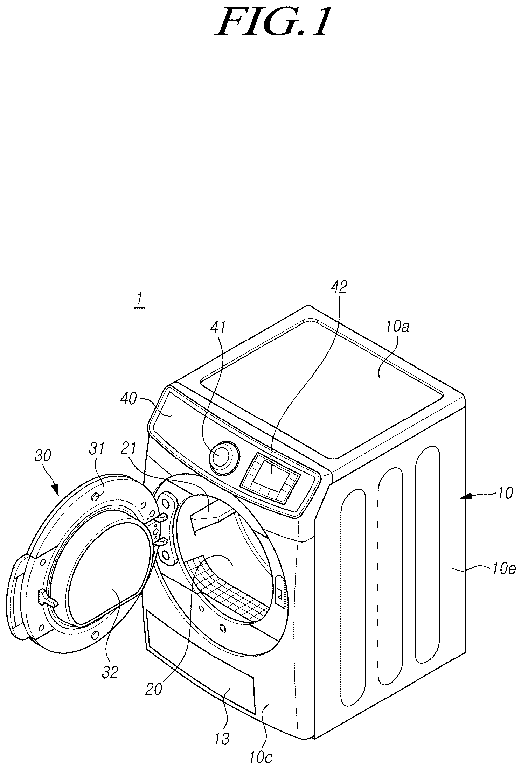

Various embodiments of the disclosure are merely exemplified herein with reference to FIG. 1 to FIG. 19D, to describe the principle of the disclosure, and should not be interpreted as limiting the scope of the disclosure. Those skilled in the art will understand that the principle of the disclosure may be implemented in any appropriately disposed system or device.

Embodiments of the disclosure are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

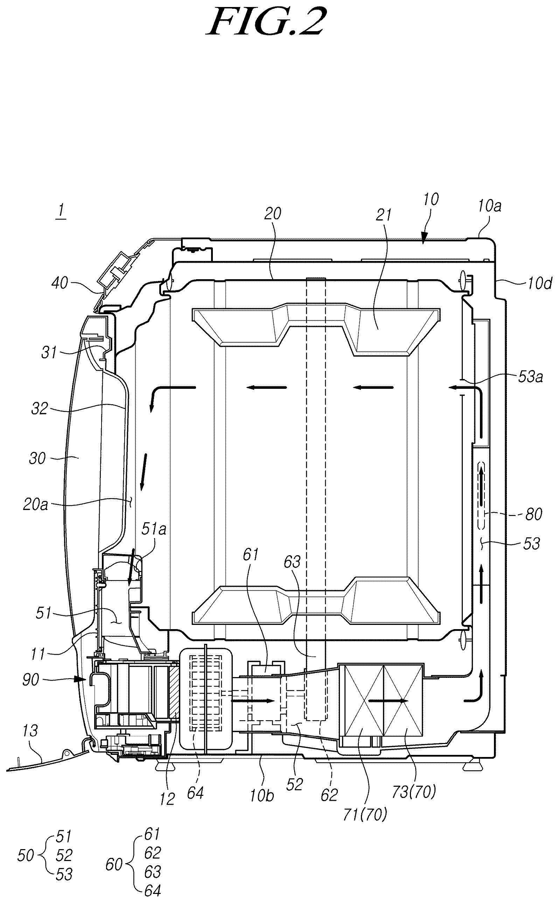

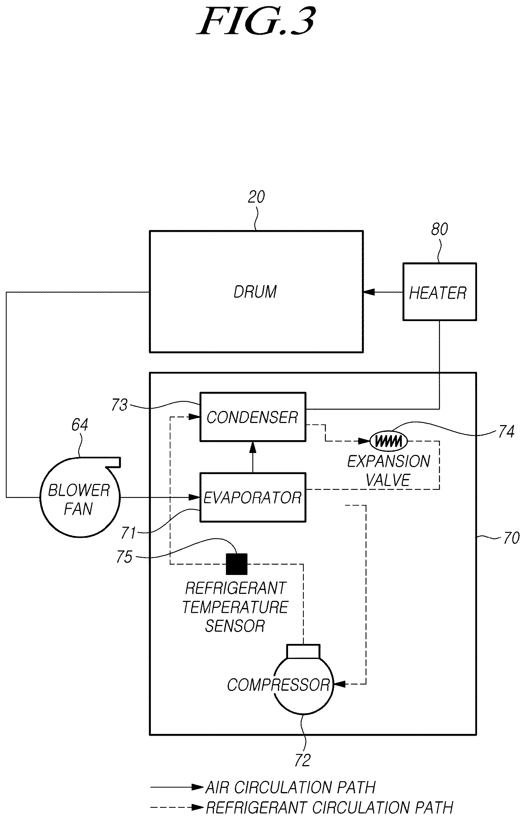

FIG. 1 is a perspective view illustrating an example clothing treatment device according to an embodiment. FIG. 2 is a cross-sectional view schematically illustrating an example clothing treatment device according to an embodiment. FIG. 3 is a view conceptually illustrating an example air circulation path of air circulating inside and outside the drum of the clothing treatment device of FIG. 2 and an example refrigerant circulation path of the heat changer.

FIG. 1 to FIG. 3 illustrate a clothes dryer as an example of a clothing treatment device 1 for convenience of description, but the disclosure is not limited thereto.

Referring to FIG. 1 to FIG. 3, a clothing treatment device 1 may include a main body 10, a drum 20 (or clothes receiving unit), a door 30, a control panel 40, an air circulation path 50, a driver 60, or a heat exchanger 70.

According to an example embodiment, the main body 10 may be provided to receive components such as the drum 20 or the heat exchanger 70 therein. The main body 10 may have, e.g., a hexahedral shape, but the disclosure is not limited thereto. The main body 10 may include an upper frame 10a, a lower frame 10b, a rear frame 10d, a front frame 10c, a left frame 10e, and a right frame (not shown). An opening may be formed in the front frame 10c, and the door 30 may be disposed at a portion corresponding to the opening. Here, at least two of the upper frame 10a, the lower frame 10b, the front frame 10c, the rear frame 10d, the left frame 10e, or the right frame may be integrally formed, or each of them may be separately manufactured and assembled. Further, each of the upper frame 10a, the lower frame 10b, the front frame 10c, the rear frame 10d, the left frame 10e, or the right frame may be press-molded with an iron plate material or injection-molded with a resin material.

According to an example embodiment, the door 30 may be coupled to a hinge fixed to the front frame 10c to be rotatable. For example, at least a portion of the door 30 may be formed of a transparent material so that the inside may be visible from the outside. The door 30 may be opened or closed to put or withdraw the drying item (e.g., clothes) into or from the drum 20 positioned inside the main body. For example, the door 30 may be locked by a locking device (not shown) to prevent opening while the clothing treatment device 1 is driven (or in operation).

According to an example embodiment, the door 30 may include a door frame 31 or a glass member 32. The glass member 32 may be formed of, e.g., a transparent tempered glass material to allow visibility through the inside of the main body 10. The glass member 32 may protrude toward the inside of the drum 20 to prevent the drying item (e.g., clothes) from being unbalanced toward the door 30 when the clothing treatment device 1 is driven.

According to an example embodiment, the drum 20 may have a cylindrical shape, and an opening 20a may be formed on one side thereof. Specifically, the drum 20 may have a cylindrical shape disposed horizontally in the main body 10, and the opening 20a may be formed in a front portion of the drum 20. The opening may be disposed at a position corresponding to the door 30. The user may put the drying item into the drum 20 through the opening 20a of the drum 20 or withdraw the drying item from the inside of the drum 20. The drum 20 may be disposed to be rotatable by receiving power from the driver 60.

According to an embodiment, the drum 20 may include a plurality of lifters 21 disposed inside and arranged to be spaced apart from each other by a predetermined interval along the circumferential direction. For example, the lifter 21 may lift the drying item (e.g., clothes) while the drum 20 is rotating so that the drying item (e.g., clothes) repeatedly rises and falls, thereby evenly drying several sides or surfaces of the drying item (e.g., clothes).

According to an example embodiment, the control panel 40 may include an input unit 41 or a display unit 42. For example, the input unit 41 may be configured to obtain a user input for controlling the clothing treatment device 1. The input unit 41 may include, e.g., a power button for turning on/off the power of the clothing treatment device 1 or an operation button for setting a drying operation of the clothing treatment device 1. The power button or the operation button may be, e.g., a tact switch, a push switch, a slide switch, a toggle switch, a micro switch, or a touch switch. Alternatively, the input unit 41 may include an input device in the form of a jog shuttle that may be gripped and rotated as illustrated in FIG. 1. The display unit 42 may display, e.g., drying setting or drying operation information in response to a user input. The display unit 42 may include, e.g., various types of display panels such as a liquid crystal display (LCD), a light emitting diode (LED), an organic light emitting diode (OLED), a light emitting diode (QLED), or a micro LED and may be implemented as a touch screen by providing a touch pad on a front surface thereof, but the disclosure is not limited to a specific type of display.

According to an example embodiment, the air circulation flow path 50 may include an inlet flow path 51, a connection flow path 52, or a discharge flow path 53. When the clothing treatment device 1 is in operation, hot and humid air may be introduced into the inlet flow path 51 to dry the drying item (e.g., clothes) introduced into the drum 20, and hot and humid air may be discharged into the discharge flow path 53. The hot and humid air introduced through the inlet flow path 51 may be heated and dehumidified by the heat exchanger 70 while passing through the connection flow path 52 to be converted into high-temperature and low-humidity air. Referring to FIG. 3, the air circulation flow path 50 is illustrated by solid line. The air circulation flow path 50 may be dehumidified and heated while sequentially passing through a blower fan 64, an evaporator 71, or a condenser 73 along the solid line of FIG. 3.

According to an example embodiment, the inlet flow path 51 may be formed by an inlet duct 11. The inlet duct 11 may be positioned, e.g., at a lower front portion of the drum 20. In other words, the inlet duct 11 may be disposed adjacent to the front frame 10c of the main body 10 but is not limited thereto.

According to an example embodiment, the clothing treatment device 1 may include a filter member 12. The filter member 12 may be mounted or provided on a lint cleaning device 90. For example, the filter member 12 may be disposed on the upstream side of the heat exchanger 70 in the air circulation path. The air introduced into the inlet flow path 51 through an inlet 51a inside the drum 20 may include foreign substances (e.g., lint or dust). Such foreign substances may be filtered or processed by the filter member 12 if the air is introduced into the inlet flow path 51.

According to an example embodiment, the connection flow path 52 may be provided under the drum 20. The air filtered by the filter member 12 may pass through the inlet flow path 51 and enter the connection flow path 52. Air may be heated and dehumidified by the heat exchanger 70 while passing through the connection flow path 52. The process of heating and dehumidifying air by the heat exchanger 70 is described below.

According to an example embodiment, the discharge flow path 53 may be formed by a discharge duct 13. The discharge duct 13 may be positioned, e.g., behind the drum 20. In other words, the discharge duct 13 may be disposed adjacent to the rear frame 10d of the main body 10 but is not limited thereto. The discharge duct 13 may be connected to, e.g., the rear surface of the drum 20. Accordingly, high-temperature and low-humidity air passing through the discharge flow path 53 may be discharged to a discharge port 53a positioned on the rear surface of the drum 20 to dry the drying item (e.g., clothes) in the drum 20.

According to an embodiment, the driver 60 may include a driving motor 61, a pulley 62, a driving belt 63, or the blower fan 64. The driver 60 may form a flow of air in the air circulation flow path 50 by, e.g., rotating the drum 20 or using the blower fan 64. The illustrated driver 60 is provided so that one driving motor 61 rotates the drum 20 and the blower fan 64 at the same time, but this is merely an example, and a plurality of driving motors may be provided to independently rotate the drum 20 and the blower fan 64.

According to an example embodiment, the driving motor 61 may be provided to transfer rotational power to the pulley 62 and the blower fan 64. The driving motor 61 may be provided inside the main body 10. The driving motor 61 may be disposed, e.g., under the drum 20.

According to an example embodiment, the driving belt 63 may be connected to the pulley 62 and may be partially provided to surround the outer circumferential surface of the drum 20. In other words, the driving belt 63 may rotate the drum 20 by transferring the rotational power of the pulley 62 to the drum 20. The drum 20 may rotate clockwise or counterclockwise according to the driving or operation of the driving motor 61.

According to an example embodiment, the blower fan 64 may receive rotational power from the driving motor 61. The blower fan 64 may be provided to allow air to circulate inside by forming a flow of air in the air circulation flow path 50. The blower fan 64 may be provided, e.g., in the connection flow path 52. The blower fan 64 may be disposed, e.g., adjacent to the inlet flow path 51. Alternatively, the blower fan 64 may be disposed at a portion or area where the inlet flow path 51 and the connection flow path 52 are connected. Therefore, air in the drum 20 may be effectively introduced into the inflow flow path 51 by the rotation of the blower fan 64.

According to an example embodiment, the heat exchanger 70 may include the evaporator 71, a compressor 72, the condenser 73, or an expansion valve 74. The evaporator 71, the compressor 72, the condenser 73, or the expansion valve 74 may be disposed under the drum 20. The refrigerant circulates inside the heat exchanger 70, and the refrigerant circulation path is shown in FIG. 3 by a dashed line. As illustrated in FIG. 3, the refrigerant may be circulated while sequentially passing through the evaporator 71, the compressor 72, the condenser 73, and the expansion valve 74.

According to an example embodiment, the evaporator 71 may be provided to evaporate a refrigerant that has become a liquid (or in a liquid state) at a low temperature and a low pressure while passing through the expansion valve 74. As the liquid refrigerant is evaporated, heat exchange may occur between the evaporator 71 and the gas around it. The air passing through the connection flow path 52 first passes through the evaporator 71, and the evaporator 71 may absorb latent heat of the air while evaporating the liquid refrigerant. The air, in which latent heat is absorbed, may condense moisture contained in the air as the temperature decreases.

According to an example embodiment, the compressor 72 may be provided to compress the gaseous refrigerant received from the evaporator 71. The compressor 72 may compress the gaseous refrigerant into a high temperature and high-pressure state. Specifically, the compressor 72 may receive electrical energy from the outside and compress the gaseous refrigerant at high temperature and high pressure using a rotational force such as from an electric motor. Alternatively, the compressor 72 may compress the refrigerant through the reciprocation of the piston, but the disclosure is not limited thereto.

According to an example embodiment, the condenser 73 may condense the high-temperature and high-pressure refrigerant received from the compressor 72. The condenser 73 may dissipate heat generated while condensing the refrigerant to the outside of the condenser 73. The gas that has passed through the evaporator 71 in the connection flow path 52 and are in a low-temperature and low-humidity state may change to a high-temperature and low-humidity state due to heat dissipation of the condenser 73 while passing through the condenser 73. In other words, while the air in the high-temperature and high-humidity state passes through the connection flow path 52, the air may be converted into the high-temperature and low-humidity state by the evaporator 71 and the condenser 73 and discharged into the drum 20 through the discharge flow path 53. The condensed refrigerant may move back to the evaporator 71 and circulate inside the heat exchanger 70.

According to an example embodiment, the heat exchanger 70 may further include a refrigerant temperature sensor 75. The refrigerant temperature sensor 75 may be disposed, e.g., on a path through which the refrigerant passes or flows. In particular, the refrigerant temperature sensor 75 may be provided on a path between the compressor 72 and the condenser 73 to measure the temperature of the refrigerant discharged from the compressor 72 but is not limited thereto.

According to an example embodiment, the clothing treatment device 1 may further include a heater 80 provided inside the air circulation flow path 50. The heater 80 may be positioned, e.g., on the discharge flow path 53. In particular, the heater 80 may be disposed downstream of the evaporator 71 and the condenser 73. Accordingly, the heater 80 may additionally heat the air passing through the heat exchanger 70. The heater 80 may further heat the air by assisting the condenser 73, thereby increasing the temperature of the air supplied to the drum 20 more rapidly.

According to an example embodiment, the clothing treatment device 1 may include the lint cleaning device 90. The lint cleaning device 90 may be disposed at a lower portion of the clothing treatment device 1. The lint cleaning device 90 may be disposed so as to be approached from the outside by opening the lower door 13. The lint cleaning device 90 may be configured to clean and/or store lint (or foreign matter) filtered or loaded on the surface of the filter member 12. A detailed description of the structure of the lint cleaning device 90 is described below.

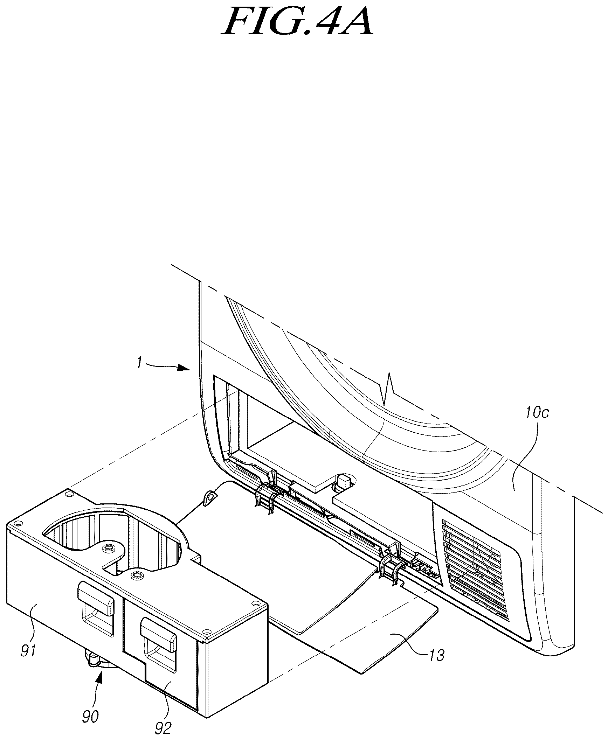

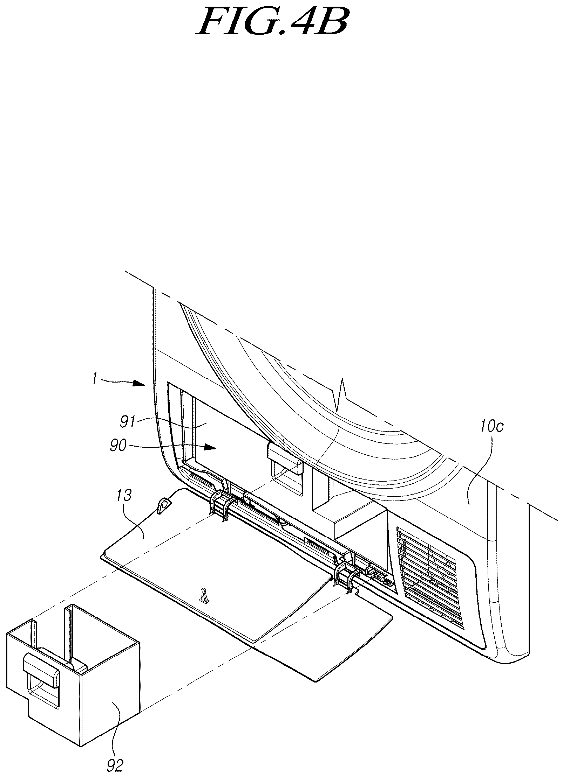

FIG. 4A and FIG. 4B are views illustrating an example state in which a lint cleaning device is provided in a clothing treatment device according to an embodiment.

The clothing treatment device 1 shown in FIG. 4A and FIG. 4B may be substantially the same as the clothing treatment device 1 shown in FIG. 1 and FIG. 2. Hereinafter, the same reference numerals will be assigned to components that are substantially the same as or similar to those illustrated in FIG. 1 and FIG. 2.

Referring to FIG. 4A and FIG. 4B, the lint cleaning device 90 may be disposed at a lower portion of the clothing treatment device 1. For example, the lint cleaning device 90 may be disposed under a drum (e.g., the drum 20 of FIG. 2). The lint cleaning device 90 may be disposed so as not to be seen from the outside by the lower door 13. When the lower door 13 is opened, some of the modularized components of the lint cleaning device 90 may be separated from the clothing treatment device 1 in a sliding manner. A configuration of the lint cleaning device 90 modularized and detachable from the clothing treatment device 1 is described below.

According to an embodiment, the lint cleaning device 90 may include a case 91. Components for removing lint loaded on the surface of a filter member (e.g., the filter member 12 of FIG. 2) may be received in the case 91.

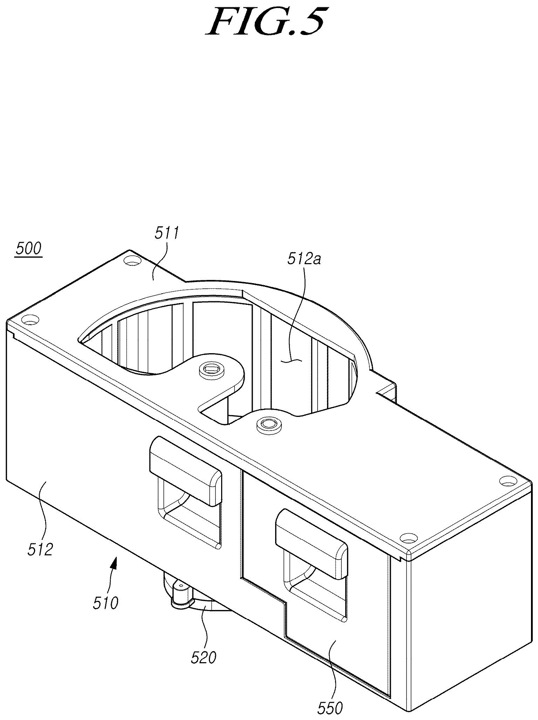

According to an embodiment, the lint cleaning device 90 may include a lint chamber 92. The lint chamber 92 may be disposed to receive the lint cleaned by a brush (e.g., a brush 540 of FIG. 5). The lint chamber 92 may be disposed to be detachable from the case 91. The lint chamber 92 may slide in or out from the case 91. The user may open the lower door 13 and slide out the lint chamber 92 to remove the lint received therein.

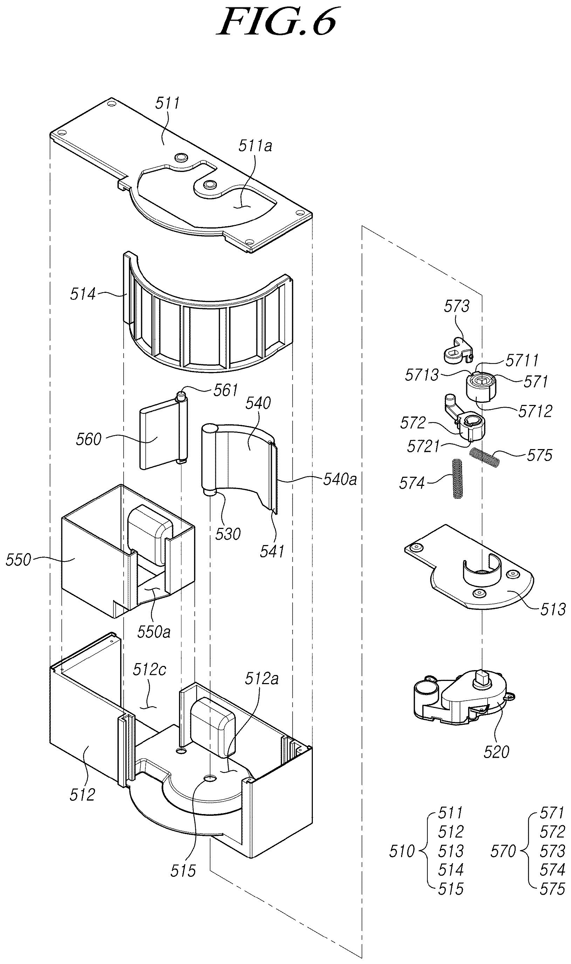

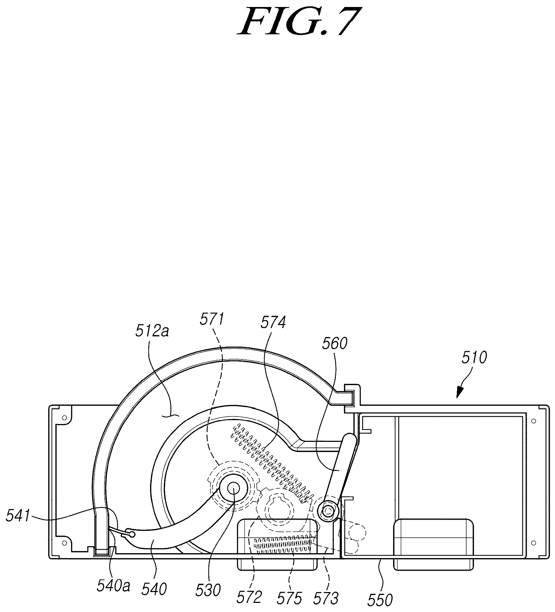

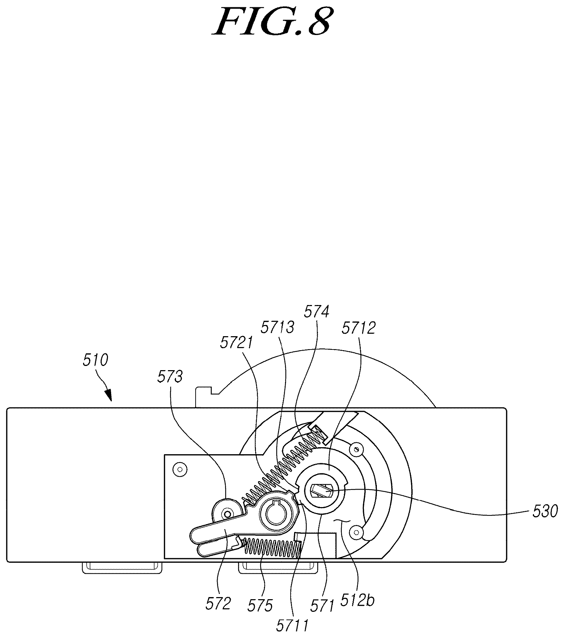

FIG. 5 is a perspective view illustrating an example lint cleaning device according to an embodiment. FIG. 6 is an exploded perspective view illustrating an example lint cleaning device according to an embodiment. FIG. 7 is a view illustrating an example upper portion of a lint cleaning device according to an embodiment. FIG. 8 is a view illustrating an example lower portion of a lint cleaning device according to an embodiment.

A lint cleaning device 500 illustrated in FIG. 5 to FIG. 8 may be substantially the same as or similar to the lint cleaning device 90 of the clothing treatment device 1 illustrated in FIG. 1 and FIG. 2. The lint cleaning device 500 illustrated in FIG. 5 to FIG. 8 may be included in the clothing treatment device 1 illustrated in FIG. 1 and FIG. 2.

The lint cleaning device 500 illustrated in FIG. 5 to FIG. 8 may be provided on a clothes dryer as illustrated in FIG. 4A and FIG. 4B, but the clothing treatment device 1 described in the disclosure is not limited to the clothes dryer. In other words, the lint cleaning device 500 illustrated in FIG. 5 to FIG. 8 may include or be disposed in any device including a heat exchanger for receiving clothes to be dried in a specific space and drying and heating humid air exhausted from the specific space.

According to an example embodiment, the lint cleaning device 500 may be modularized. The lint cleaning device 500 may be disposed under the clothes receiving unit (e.g., the drum 20 of FIG. 2) of the clothing treatment device (e.g., the clothing treatment device 1 of FIG. 4A) and may be modularized to be slidable in or out. For example, the components other than a driver 520 of the lint cleaning device 500 may be modularized to detachably mounted or provided in the clothing treatment device 1.

Referring to FIG. 5 to FIG. 8, the lint cleaning device 500 may include all or some of a case 510, the driver 520, a shaft 530, the brush 540, a lint chamber 550, an chamber door 560, or an operation assembly 570. The lint cleaning device 500 may automatically clean the lint accumulated on the surface of the filter member 12 while the air, including the lint, passes through the filter member (e.g., the filter member 12 of FIG. 2) during the drying cycle of the clothing treatment device (e.g., the clothing treatment device 1 of FIG. 1). The lint cleaning device 500 may be coupled to the filter member 12 to clean the lint filtered on the surface of the filter member 12. When the wiped (or removed) lint is received and fills the lint chamber 550, the clothing treatment device 1 may detect whether the lint chamber is full.

According to an example embodiment, the case 510 may form an outer appearance of the lint cleaning device 500. The case 510 may form a receiving space for placing components such as the brush 540, the lint chamber 550, the operation assembly 570, and the chamber door 560 therein. For example, in the case 510, a first space 512a in which the brush 540 rotates to clean the lint may be formed. For example, a second space 512b in which the operation assembly 570 is received may be formed in the case 510. For example, the first space 512a in which the brush 540 is received and the second space 512b in which the operation assembly 570 is received may be spatially separated (e.g., separated by a partition wall).

The case 510 may form a third space 512c to receive the lint chamber 550. The third space 512c may be a space connected to the first space 512a. The third space 512c may be spatially separated from the second space 512b. The lint chamber 550 may be detachably received in the third space 512c.

According to an example embodiment, the case 510 may include an upper case 511, a body case 512, and a lower case 513. The upper case 511 is a portion forming the upper surface of the case 510 and may be detachably coupled to the body case 512. An opening 511a may be formed in the upper case 511. Air may be circulated through the opening 511a of the upper case 511. For example, air including lint introduced through the inlet flow path 51 of the clothing treatment device (e.g., the clothing treatment device 1 of FIG. 2) may be introduced into the lint cleaning device 500 through the opening 511a. The introduced air may pass through the filter member 12 to filter lint. Although not shown, the upper case 511 and the body case 512 may be integrally formed.

The body case 512 may be configured to define the first space 512a, the second space 512b, and the third space 512c. For example, the second space 512b may be positioned or disposed between the body case 512 and the lower case 513.

According to an embodiment, the case 510 may include a filter mounting portion 514 and a shaft through hole 515. The filter mounting portion 514 may be coupled to the body case 512. The shaft through hole 515 may be formed through one surface of the body case 512.

The filter mounting portion 514 may be a portion formed to mount the filter member 12. The filter mounting portion 514 may be disposed along a moving direction of a tip portion 540a of the brush 540 described below. The filter mounting portion 514 may be opened for air to penetrate (or pass). The filter member 12 may be mounted or provide outside or inside the filter mounting portion 514. For example, the filter mounting portion 514 may have an arc-shaped cross section. The filter mounting portion 514 may be integrally formed with the case 510, but is not limited thereto, and may be configured so that a separate component is coupled to the case 510.

The shaft through hole 515 may be a portion through which the shaft 530 to be coupled (or connected) to the brush 540 penetrates or gets inserted. The shaft through hole 515 may be formed to penetrate, e.g., a partition wall between the first space 512a and the second space 512b.

According to an example embodiment, the driver 520 may be disposed to rotate the brush 540 and the chamber door 560. In the disclosure, an operation structure in which the brush 540 and the chamber door 560 are sequentially opened and closed using one driver 520 may be provided. The brush 540 and the chamber door 560 may be rotated due to the rotation of the motor disposed in the driving part 520. For example, the rotational power of the driver 520 may be directly transferred to the brush 540. Here, the direct transfer of the rotational power may not only mean that the driver 520 and the brush 540 are directly coupled to each other but may also mean that the rotational power is transferred so that the angle at which the motor of the driver 520 rotates and the angle at which the brush 540 rotates are substantially the same even if the motor of the driver 520 is indirectly coupled to each other.

According to an example embodiment, the shaft 530 may be configured to connect the driver 520 and the brush 540. The shaft 530 may be coupled to the rotation shaft of the driver 520 and may be coupled to the brush 540 through the shaft through hole 515 of the case 510. The shaft 530 may be coupled to the brush 540 by being inserted into the shaft hole of the brush 540.

According to an example embodiment, the brush 540 may be disposed to rotate between the first position and the second position. The brush 540 may be configured to sweep (e.g., remove or clean) the lint attached to the filter member 12 by rotating about the rotational axis. The brush 540 may be configured so that the tip portion 540a rotates along the inner circumferential surface of the filter member 12. While the brush 540 is rotated, the tip portion 540a of the brush 540 may be adjacent to the inner circumferential surface of the filter member 12 to clean the lint attached to the filter member 12. Here, the rotational axis of the brush 540 may be the same axis as the rotational axis of the shaft 530. Here, the first position may refer to a position before the brush 540 starts cleaning the lint. Here, the second position may refer to a position where the brush 540 is rotated from the first position to finish cleaning the lint attached to the filter member 12. The second position may be a position relatively closer to the chamber door 560 than the first position. The second position may be a position relatively closer to the lint chamber 550 than the first position.

The brush 540 may be rotated in a reciprocating manner between the first position and the second position. For example, when the motor of the driver 520 drives in the first rotation direction (e.g., the forward direction or the clockwise direction), the brush 540 may rotate in a direction from the first position to the second position. For example, when the motor of the driver 520 drives in the first rotation direction, the brush 540 may also rotate in the first rotation direction. The brush 540 may move from the first position to the second position to clean the lint on the filter member 12, and when reaching the second position, send the lint to the lint chamber 550. For example, when the motor of the driver 520 drives in the second rotation direction (e.g., the reverse direction or the counterclockwise direction) opposite to the first rotation direction, the brush 540 may be rotated from the second position toward the first position. For example, when the motor of the driver 520 drives in the second rotation direction, the brush 540 may also rotate in the second rotation direction. However, the disclosure is not limited thereto, and the rotation direction of the motor of the driver 520 and the rotation direction of the brush 540 may be opposite to those illustrated. The brush 540 may be referred to as a 'wiper,' a 'scraper,' or a 'blade.'

According to an example embodiment, the brush 540 may include an elastomer 541 formed of an elastic or rubber material. The elastomer 541 may be disposed on the tip portion 540a of the brush 540. The elastomer 541 may be a portion positioned adjacent to the inner circumferential surface of the filter member 12 while the brush 540 is rotated. The tip portion 540a of the brush 540 may be formed of an elastomer 541 so as to prevent the filter member 12 from being damaged when the brush 540 rotates.

According to an example embodiment, the brush 540 may include a shaft hole. A shaft 530 may be inserted into the shaft hole to form a rotational axis. The brush 540 may rotate between the first position and the second position using the shaft 530 as a rotational axis.

According to an example embodiment, the lint chamber 550 may be disposed to receive the lint removed by the brush 540. The lint swept by the rotation of the brush 540 may be moved to the lint chamber 550.

According to an example embodiment, the lint chamber 550 may include a lint inlet 550a. The lint swept by the rotation of the brush 540 may be received in the lint chamber 550 through the lint inlet 550a. The lint inlet 550a may be positioned between the first space 512a and the third space 512c of the case 510 while the lint chamber 550 is mounted or provided in the case 510.

The lint chamber 550 may be received in the third space 512c of the case 510. The lint chamber 550 may slide in or out from the case 510. When the lint chamber 550 is filled with lint, only the lint chamber 550 may be separated to remove the lint.

According to an example embodiment, the chamber door 560 may be disposed to open or close the lint chamber 550. The chamber door 560 may be mounted or provided in the case 510. The chamber door 560 may be disposed to open or close a portion of the case 510 connected between the first space 512a and the third space 512c. When the chamber door 560 is opened, the chamber door 560 may be opened by moving toward the brush 540. For example, when the chamber door 560 is opened, the chamber door 560 may be opened by moving toward the first space 512a. The chamber door 560 may open or close the lint chamber 550 by receiving power from the driver 520 by the operation assembly 570 to be described below. The chamber door 560 may be referred to as an opening/closing plate. The chamber door 560 may separate the space in which the brush 540 cleans the lint from the space in the lint chamber 550, thereby preventing the lint in the lint chamber 550 from flowing back into the first space 512a in which the brush 540 is received and contaminating the inside.

According to an example embodiment, the chamber door 560 may include a rotation shaft 561. The rotation shaft 561 of the chamber door 560 may be fixed by the case 510 for other movements than rotation. For example, the rotation shaft of the chamber door 560 may be rotatably coupled to the upper case 511 and the body case 512.

According to an example embodiment, the operation assembly 570 may be configured to move the chamber door 560 in response to the operation of the driver. The operation assembly 570 may be received in the second space 512b of the case 510. The operation assembly 570 may be configured so that the moving direction of the chamber door 560 varies according to the rotation direction of the driver 520 motor. For example, when the motor of the driver 520 rotates in the first rotation direction, the chamber door 560 may open the lint chamber 550. For example, when the motor of the driver 520 rotates in the second rotation direction, the chamber door 560 may close the lint chamber 550.

According to an example embodiment, the operation assembly 570 may include a cam 571 coupled to the driver 520, a lever 572 configured to rotate in response to rotation of the cam 571, and a latch 573 configured to rotate in response to rotation of the lever 572. Each of the cam 571, the lever 572, and the latch 573 may be received in the second space 512b of the case 510.

The cam 571 may be rotatably coupled to the driver 520. The cam 571 may be coupled to e.g., the rotation shaft of the driver 520 motor and may be rotated according to the operation of the motor. The cam 571 may be disposed between the shaft 530 and the driver 520.

According to an example embodiment, the cam 571 may include a first pressing protrusion 5711, a second pressing protrusion 5712 spaced apart from the first pressing protrusion 5711 in the circumferential direction, and a recess 5713 formed between the first pressing protrusion 5711 and the second pressing protrusion 5712. The first pressing protrusion 5711 may rotate the lever 572 by pressing the lever 572. The second pressing protrusion 5712 may rotate the lever 572 by pressing the lever 572.

The first pressing protrusion 5711 and the second pressing protrusion 5712 may have substantially the same radius but are not limited thereto. The first pressing protrusion 5711 and the second pressing protrusion 5712 may protrude to be spaced apart from the rotation shaft by substantially the same distance. The first pressing protrusion 5711 may protrude while maintaining a constant (or the same) radius along the circumferential direction but is not limited thereto. The second pressing protrusion 5712 may protrude while maintaining a constant (or the same) radius along the circumferential direction but is not limited thereto.

A circumferential length of the first pressing protrusion 5711 may be shorter than a circumferential length of the second pressing protrusion 5712 as illustrated. However, the disclosure is not limited thereto, and the circumferential length of the first pressing protrusion 5711 may be equal to or larger than the circumferential length of the second pressing protrusion 5712 unlike that illustrated.

According to an example embodiment, the recess 5713 may be formed between the first pressing protrusion 5711 and the second pressing protrusion 5712. The radius of the recess 5713 may be smaller than the radius of the first pressing protrusion 5711 or the radius of the second pressing protrusion 5712.

The lever 572 may include a lever protrusion 5721 formed to protrude radially outside. The lever protrusion 5721 may be a portion pressed by the first pressing protrusion 5711 or the second pressing protrusion 5712 of the cam 571. If the lever protrusion 5721 is pressed by the first pressing protrusion 5711 or the second pressing protrusion 5712 of the cam 571, the lever 572 may be rotated. When the lever protrusion 5721 is positioned in the recess 5713 of the cam 571, the lever 572 may not be pressed by the cam 571.

If the lever 572 is pressed by the pressing protrusion 5711 or 5712 of the cam 571 and rotated in one direction, the latch 573 coupled to the lever 572 may be rotated in response thereto.

The latch 573 may be configured to be rotated in response to the rotation of the lever 572. The latch 573 may be configured to open or close the chamber door 560. The chamber door 560 may be rotated together according to the rotation of the latch 573.

The operation assembly 570 may further include a first spring 574 disposed between the case 510 and the lever 572. The elastic force of the first spring 574 may apply a force to the lever 572 in a direction in which the chamber door 560 is closed by rotation of the lever 572.

The operation assembly 570 may further include a second spring 575 disposed between the case 510 and the latch 573. The elastic force of the second spring 575 may apply a force to the latch 573 in a direction in which the chamber door 560 is opened.

According to an example embodiment, the modulus of elasticity of the first spring 574 may be smaller than the modulus of elasticity of the second spring 575 but is not limited thereto.

A detailed operation method and process for the operation assembly 570 is described below.

According to an example embodiment, the lint cleaning device 500 may include the filter member 12. The filter member 12 may be mounted or provided on the filter mounting portion 514 of the case 510. The filter member 12 may have a curved shape. The filter member 12 may have, e.g., a cylindrical shape in which some of the side surfaces are open. The filter member 12 may have, e.g., an arc shape. However, the disclosure is not limited thereto, and the filter member 12 may be omitted from the lint cleaning device 500 and may be separately provided and mounted on the filter mounting portion 514.

According to an example embodiment, the clothing treatment device (e.g., the clothing treatment device 1 of FIG. 1) may further include a sensor (not shown) configured to detect whether the lint chamber is filled with lint.

For example, the sensor may be a current sensor that detects the current flowing through the motor of the driver 520. When the lint chamber 550 is filled with lint, a greater force may be required to close the chamber door 560 by the reaction force of the lint. As a larger force is required, a larger load may be generated on the motor. The clothing treatment device 1 may estimate the load of the motor of the driver 520 based on the current value sensed by the current sensor, and if the load of the motor exceeds a set value, the clothing treatment device 1 may determine that the lint chamber 550 is full.

For example, the sensor may be a reed switch. If the reed switch is used as a sensor, a magnetic force forming means may be disposed in a portion of the chamber door 560. The reed switch may be coupled to the case 510 to sense a magnetic force forming means in a state in which the chamber door 560 is closed. If the reed switch detects the magnetic force forming means, the clothing treatment device 1 may determine that the chamber door 560 is closed. When the lint chamber 550 is filled with lint, the chamber door 560 may not be completely closed by the pressure of the lint. In this case, since the magnetic force forming means is not detected by the reed switch, the clothing treatment device 1 may determine that the lint chamber 550 is filled with lint. The magnetic force forming means may include, e.g., a general magnet or an electromagnet, but is not limited thereto. The reed switch may sense the magnetic force forming means.

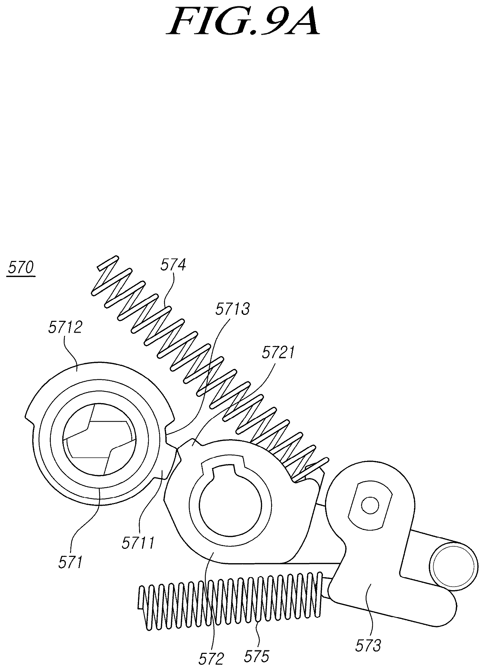

FIG. 9A to FIG. 9E are views illustrating mutual operations of an example operation assembly according to an embodiment.

The operation assembly 570 illustrated in FIG. 9A to FIG. 9E may be substantially the same as or similar to the operation assembly 570 illustrated in FIG. 5 to FIG. 8. Among the components of the operation assembly 570 illustrated in FIG. 9A to FIG. 9E, the same reference numerals are assigned to components that are substantially the same as or similar to the components illustrated in FIG. 5 to FIG. 8.

Referring to FIG. 9A to FIG. 9E, the lever 572 may be rotated in a first state or a second state according to the rotation direction of the cam 571. The first rotation direction of the cam 571 may refer to a direction in which the motor of the driver 520 rotates the brush (e.g., the brush 540 of FIG. 6) from the first position toward the second position. The second rotation direction of the cam 571 may refer to a direction in which the motor of the driver 520 rotates the brush 540 from the second position toward the first position.

FIG. 9A illustrates an example state of the operation assembly 570 when the lever 572 is in the first state. Referring to FIG. 9A, the lever 572 may be pressed and fixed by the first pressing protrusion 5711 of the cam 571. The lever protrusion of the lever 572 may be pressed by the first pressing protrusion 5711 of the cam 571. In this case, the lever 572 may be maintained in the first state by pressing the cam 571. Here, the first state may refer to a state of the lever 572 for fixing the latch 573 to a specific position to close the chamber door (e.g., the chamber door 560 of FIG. 6). In the state in which the lever 572 is fixed to the first state, the latch 573 may be fixed to a specific position so that the latch 573 closes the chamber door 560. The second spring 575 connected to the latch 573 may apply an elastic force to the latch 573 in a direction opposite to the force of the lever 572 pressing the latch 573 in the first state. Although the second spring 575 applies a force in the direction to open the chamber door 560, the latch 573 may be fixed to a specific position to close the chamber door 560 by the lever 572.

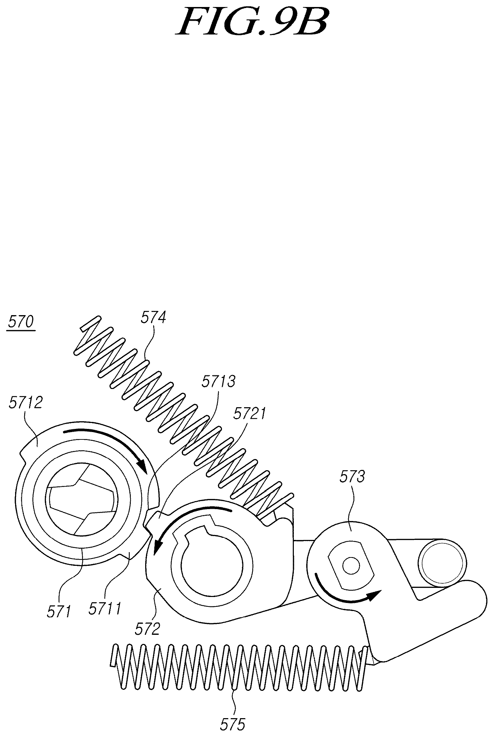

Referring to FIG. 9B, the cam 571 may be rotated in the first rotation direction. For example, the first rotation direction may refer to a clockwise direction in view of the drawings. As the cam 571 is rotated in the first rotation direction, the lever protrusion 5721 of the lever 572 may be positioned in the recess 5713 of the cam 571. At any time while the cam 571 is rotating in the first rotation direction, the lever protrusion 5721 of the lever 572 is positioned in the recess 5713 of the cam 571, so that the force applied by the cam 571 to the lever 572 may be removed. In this case, the lever 572 may be rotated at a predetermined angle in the second rotation direction opposite to the first rotation direction to be positioned in a neutral state. Here, the second rotation direction may refer to a counterclockwise direction in the drawings. Here, the neutral state may refer to any one state between the first state and the second state of the lever 572.

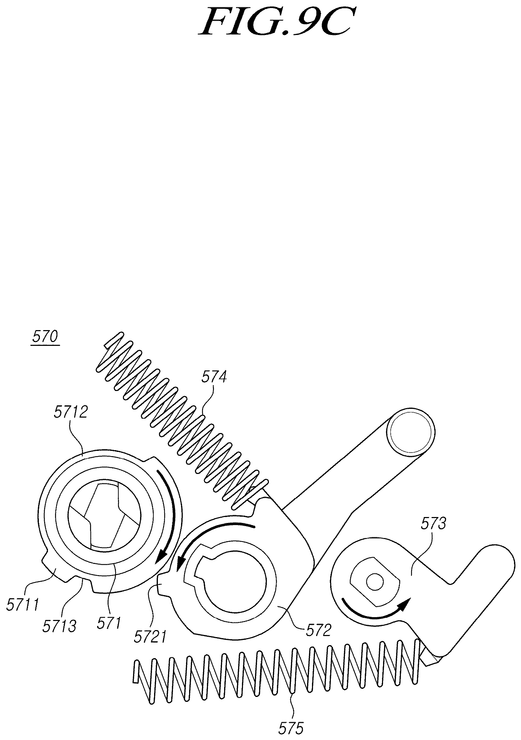

Referring to FIG. 9C, the cam 571 may be further rotated in the first rotation direction in the state of FIG. 9B. When the cam 571 is further rotated in the first rotation direction from the state illustrated in FIG. 9B, the lever 572 may be pressed by the second pressing protrusion 5712 of the cam 571. As the lever protrusion 5721 of the lever 572 is pressed by the second pressing protrusion 5712 of the cam 571, the lever 572 may be rotated from the neutral state to the second state. As the lever protrusion 5721 of the lever 572 is pressed by the second pressing protrusion 5712 of the cam 571, the lever 572 may be rotated by a predetermined angle in the second rotation direction. Here, the second state may refer to a state of the lever 572 for fixing the latch 573 to a specific position to open the chamber door (e.g., the chamber door 560 of FIG. 6). In response to the lever 572 being rotated in the second state, the latch 573 may be rotated to open the chamber door 560. If the lever 572 is rotated in the second state, the latch 573 may be rotated together in response to the rotation of the lever 572 by the elastic force of the second spring 575.

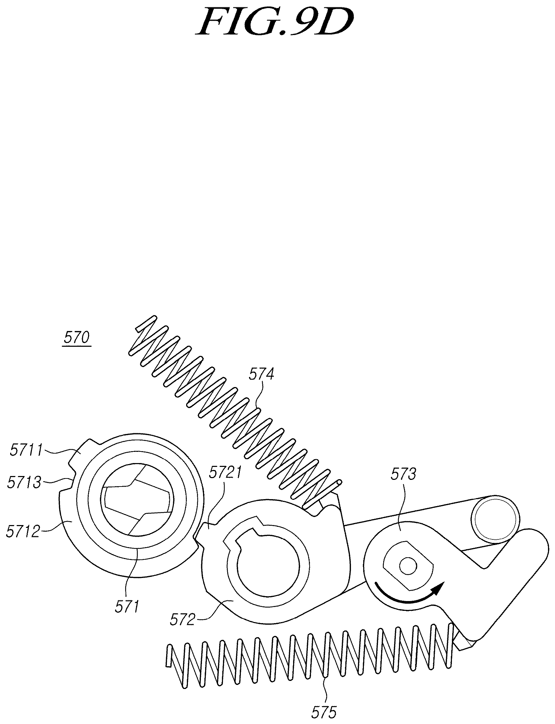

Referring to FIG. 9D, in the state of FIG. 9C, the cam 571 may be further rotated in the first rotation direction. The state illustrated in FIG. 9D may be a state when the brush 540 reaches the second position. The lever protrusion of the lever 572 may pass through the second pressing protrusion 5712 of the cam 571, so that the lever 572 may not be pressed by the cam 571. In this case, the lever 572 may be rotated from the second state to the neutral state by the first spring 574.

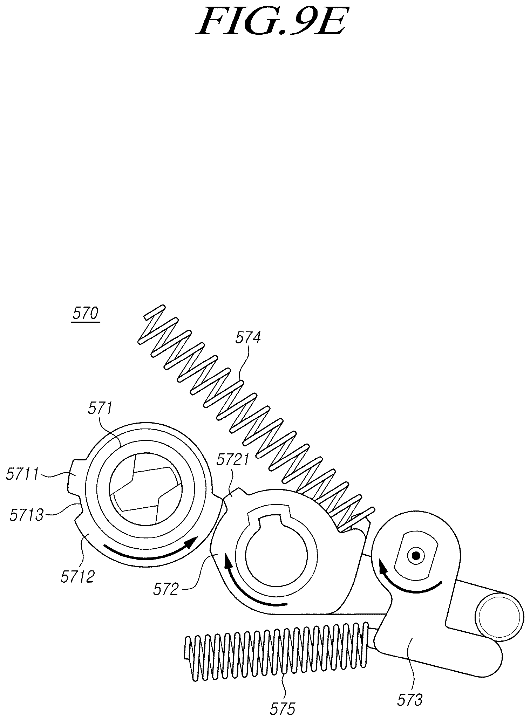

Referring to FIG. 9E, the cam 571 may be rotated in the second rotation direction in the state of FIG. 9E. If the cam 571 is rotated in the second direction, the lever protrusion 5721 of the lever 572 may be pressed by the second pressing protrusion 5712 of the cam 571. As the cam 571 is rotated in the second rotation direction and the lever 572 is pressed, the lever 572 may be rotated in the first rotation direction. The lever 572 may be rotated from the neutral state to the first state by pressing the second pressing protrusion 5712 of the cam 571. The chamber door 560 may be closed by rotating the latch 573 in response to the rotation of the lever 572 in the first state. When further rotated in the second rotation direction in the state of FIG. 9E, the operation assembly may have the state of FIG. 9A.

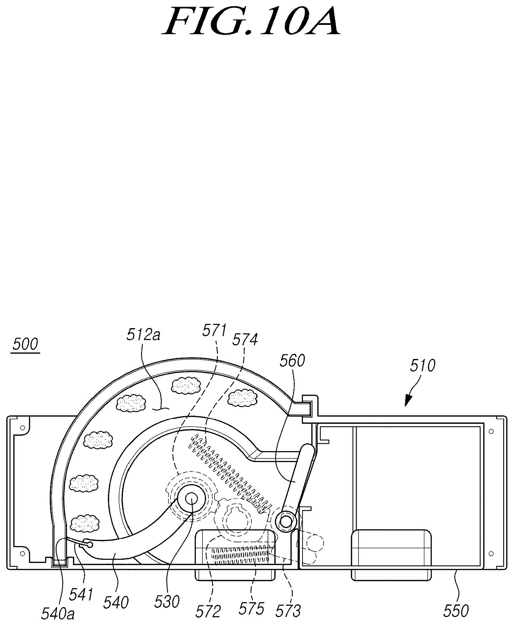

FIG. 10A to FIG. 10D are views illustrating example operations of a lint cleaning device according to an embodiment.

The lint cleaning device 500 illustrated in FIG. 10A to FIG. 10D may be substantially the same as or similar to the lint cleaning device 500 illustrated in FIG. 5 to FIG. 8. Among the components of the operation assembly 570 illustrated in FIG. 10A to FIG. 10D, the same reference numerals are assigned to components that are substantially the same as or similar to the components illustrated in FIG. 5 to FIG. 8.

FIG. 10A to FIG. 10D illustrate an organic operation process of the brush 540 and the chamber door 560 by the operation of the driver 520 in the lint cleaning device 500. A description of the operation process of the operation assembly 570 in the operation process of the lint cleaning device 500 illustrated in FIG. 10A to FIG. 10D will be replaced with the description of FIG. 9A to FIG. 9E.

FIG. 10A illustrates an example state when the brush 540 is in the first position. When the brush 540 is in the first position, the chamber door 560 may separate the space between the first space 512a and the lint chamber 550 in the closed state. FIG. 10A may be a state in which the lint cleaning device 500 has not yet cleaned the lint attached to the filter member 12. When the brush 540 is in the first state, the operation assembly 570 may maintain the state illustrated in FIG. 9A.

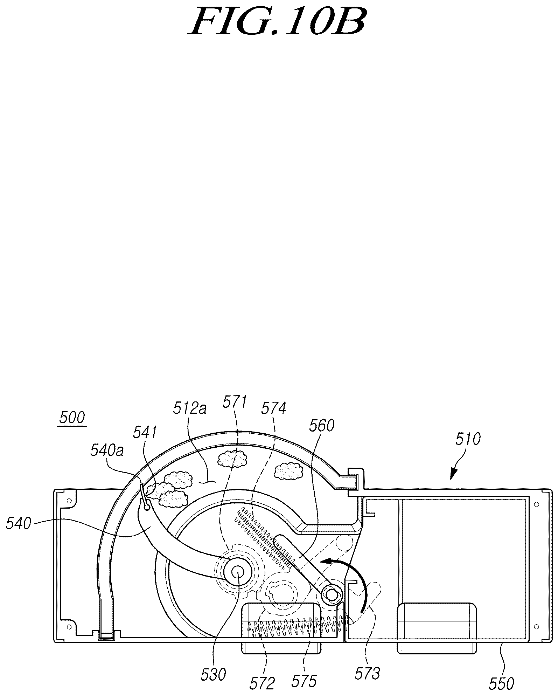

FIG. 10B illustrates an example initial operation in which the lint cleaning device 500 is configured to rotate the brush 540 to clean the lint attached to the filter member 12. The motor of the driver (e.g., the driver 520 of FIG. 6) may operate to rotate the brush 540 and the cam 571. As the driver 520 motor rotates in the first rotation direction, the brush 540 and the cam 571 may rotate in the first rotation direction. While the brush 540 is rotated in the first rotation direction, the lint attached to the filter member 12 may be swept or removed. Here, the first rotation direction may refer to a clockwise direction in the drawings. The chamber door 560 may be opened in advance before the brush 540 reaches the second position. For example, as illustrated in FIG. 9B, since the lever 572 is pressed by the second pressing protrusion 5712 of the cam 571 to open the chamber door 560, the chamber door 560 may be opened before the brush 540 reaches the second position. The chamber door 560 may be opened by the latch 573 rotated in response to rotation of the cam 571. The mechanism of the operation assembly 570 in the state illustrated in FIG. 10B is described in detail with reference to FIG. 9B and FIG. 9C.

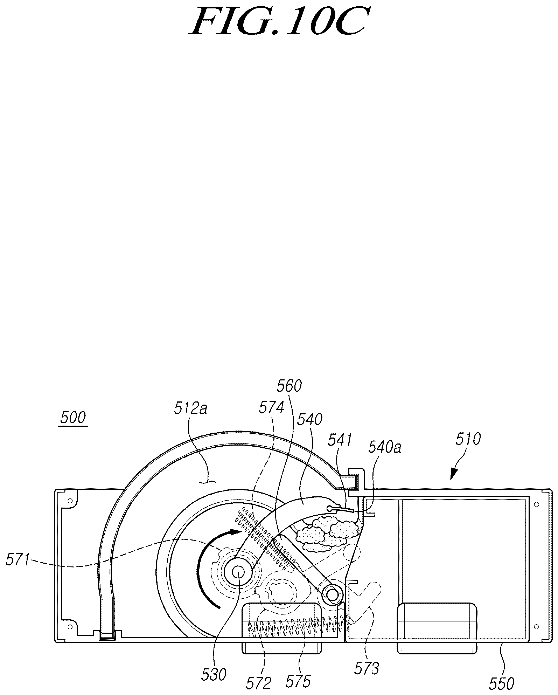

FIG. 10C illustrates an example state in which the brush 540 reaches the second position. As the brush 540 moves from the first position to the second position, the lint attached to the surface of the filter member 12 may be cleaned. The lint is swept or removed by the rotation of the brush 540, and the chamber door 560 may remain open when the brush 540 reaches the second position. The lint swept by the brush 540 may be positioned in a space between the open chamber door 560 and the lint chamber 550. The mechanism of the operation assembly 570 in the state illustrated in FIG. 10C is described in detail with reference to FIG. 9D.

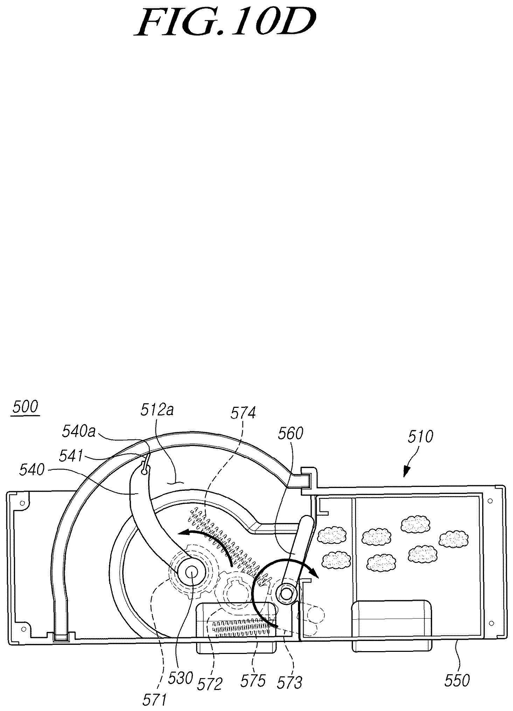

FIG. 10D illustrates an example operation in which the lint cleaning device 500 rotates the brush 540 from the second position to the first position after cleaning. The motor of the driver 520 may operate to rotate the brush 540 and the cam 571. As the motor of the driver 520 rotates in the second rotation direction opposite to the first rotation direction, the brush 540 and the cam 571 may rotate in the second rotation direction. Here, the second rotation direction may refer to a counterclockwise direction in the drawings. The chamber door 560 may be closed before the brush 540 reaches the first position. For example, as illustrated in FIG. 9E, since the lever 572 is pressed by the second pressing protrusion 5712 of the cam 571 to close the chamber door 560, the chamber door 560 may be closed before the brush 540 reaches the first position. For example, when the brush 540 starts to rotate in the second rotation direction at the second position, the chamber door 560 may close the lint chamber 550. For example, when the brush 540 is still positioned near the second position, the chamber door 560 may close the lint chamber 550. By spatially separating the space in which the brush 540 moves from the lint chamber 550, it is possible to prevent the lint received in the lint chamber 550 from being discharged back to the first space 512a. The chamber door 560 may be opened by the latch 573 rotated in response to rotation of the cam 571. The mechanism of the operation assembly 570 in the state illustrated in FIG. 10D is described in detail with reference to FIG. 9E.

According to an example embodiment, the lint cleaning device 500 may include the operation assembly 570 as described above and may organically control the operation of the brush 540 and the chamber door 560 using one driver 520 (or actuator). By minimizing the number of the drivers 520, the lint cleaning device 500 may minimize the volume occupied by the lint cleaning device 500 in the limited inner space of the clothing treatment device (e.g., the clothing treatment device 1 of FIG. 1) and reduce the manufacturing cost.

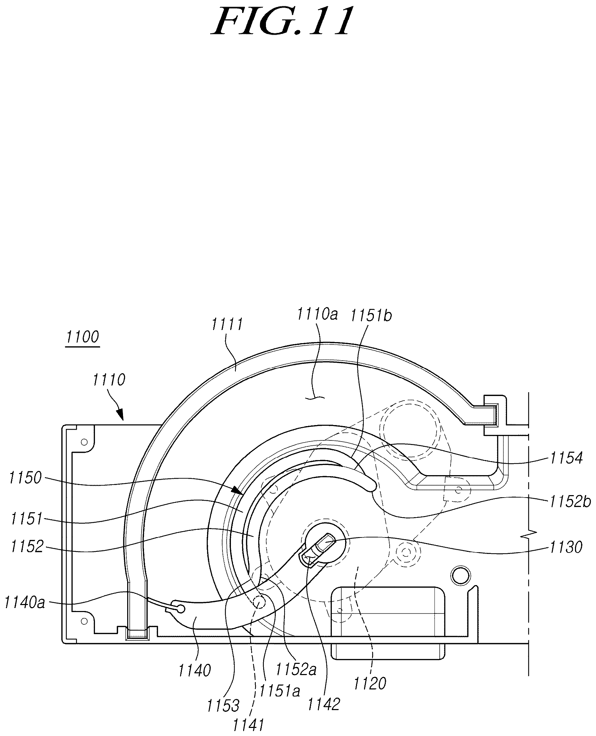

FIG. 11 is a perspective view illustrating an example lint cleaning device according to an embodiment.

The lint cleaning device 1100 illustrated in FIG. 11 may be substantially the same as or similar to the lint cleaning device 90 of the clothing treatment device 1 illustrated in FIG. 1 and FIG. 2. The lint cleaning device 1100 illustrated in FIG. 11 may be included in the clothing treatment device 1 illustrated in FIG. 1 and FIG. 2.

The lint cleaning device 1100 illustrated in FIG. 11 may be provided in a clothes dryer as illustrated in FIG. 4A and FIG. 4B, but the clothing treatment device 1 described in the disclosure is not limited to the clothes dryer. In other words, the lint cleaning device 1100 illustrated in FIG. 11 may include or be disposed in any device including a heat exchanger for receiving clothes to be dried in a specific space and drying and heating humid air exhausted from the specific space.

According to an example embodiment, the lint cleaning device 1100 may be modularized. The lint cleaning device 1100 may be disposed under the clothes receiving unit (e.g., the drum 20 of FIG. 2) of the clothing treatment device (e.g., the clothing treatment device 1 of FIG. 4A) and may be modularized to be slidable in or out. For example, the components other than a driver 1120 of the lint cleaning device 1100 may be modularized to detachably mounted or provided in the clothing treatment device 1.

Referring to FIG. 11, the lint cleaning device 1100 may include all or some of a case 1110, the driver 1120, a shaft 1130, or a brush 1140. The lint cleaning device 1100 may automatically clean the lint accumulated on the surface of the filter member 12 while the air including the lint passes through the filter member (e.g., the filter member 12 of FIG. 2) during the drying cycle of the clothing treatment device (e.g., the clothing treatment device 1 of FIG. 1). The lint cleaning device 1100 may be coupled to the filter member 12 to clean (e.g., remove) the lint filtered on the surface of the filter member 12.

According to an example embodiment, the case 1110 may form an outer appearance of the lint cleaning device 1100. The case 1110 may form a receiving space for placing a component such as the brush 1140 therein. For example, in the case 1110, a space 1110a in which the brush 1140 rotates to clean the lint may be formed.

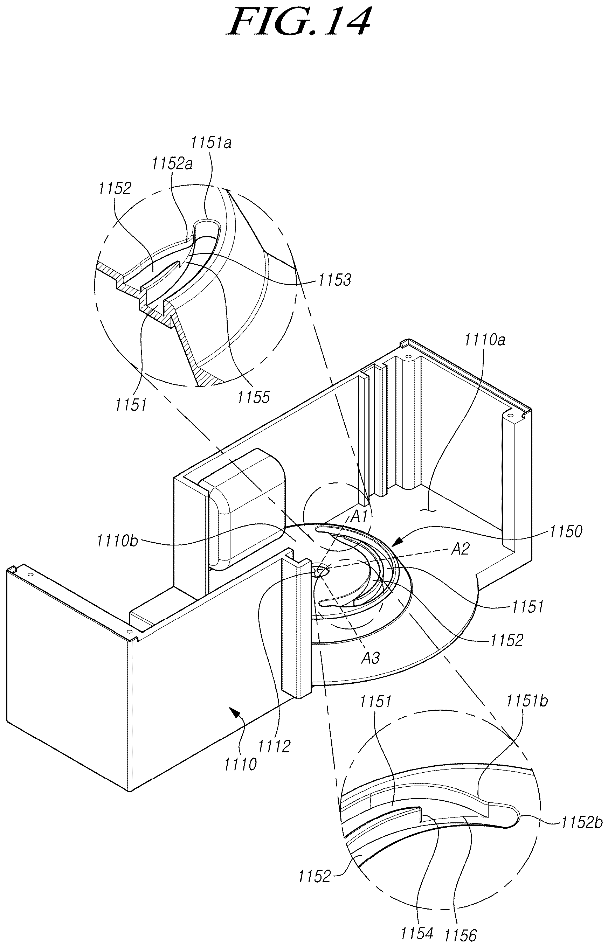

According to an example embodiment, the case 1110 may include a filter mounting portion 1111 or a shaft through hole (e.g., the shaft through hole 1112 of FIG. 14).

The filter mounting portion 1111 may be a portion disposed to mount the filter member 12. The filter mounting portion 1111 may be disposed along a moving direction of a tip portion 1140a of the brush 1140 described below. The filter mounting portion 1111 may be opened for air to penetrate (e.g., flow or enter). The filter member 12 may be mounted or provided outside or inside the filter mounting portion 1111. For example, the filter mounting portion 1111 may have an arc-shaped cross section. The filter mounting portion 1111 may be integrally formed with the case 1110, but is not limited thereto and may be configured so that a separate component is coupled to the case 1110.

The shaft through hole 1112 may be a portion through which the shaft 1130 to be coupled to the brush 1140 penetrates (e.g., flows or enters). The shaft through hole 1112 may be formed to penetrate, e.g., a wall surface 1110b of the case 1110.

According to an example embodiment, the case 1110 may include a guide rail 1150. The guide rail 1150 may be formed on the wall surface 1110b of the case 1110. The guide rail 1150 may be formed, e.g., in the form of a groove dug in the wall surface 1110b of the case 1110. The guide rail 1150 may be formed within a moving range in which the brush 1140 moves between a first position and a second position to be described below. The guide rail 1150 may be configured so that a guide protrusion 1141 of the brush 1140, to be described below, is inserted into the guide rail 1150 to guide a movement path of the guide protrusion 1141.

According to an example embodiment, the guide rail 1150 may include a first path 1151 and a second path 1152. The first path 1151 may be, e.g., a path for guiding rotation of the brush 1140 when the brush 1140 rotates in a first rotation direction at the first position to be described below. The second path 1152 may be, e.g., a path for guiding rotation of the brush 1140 when the brush 1140 rotates in a second rotation direction at the second position to be described below. Each of the first path 1151 and the second path 1152 may be formed in an arc shape. The brush 1140 may be rotated along the first path 1151 or the second path 1152.

According to an example embodiment, the first path 1151 may be positioned relatively radially outside compared to the second path 1152. The radius of the first path 1151 may be larger than the radius of the second path 1152.

According to an example embodiment, the first path 1151 and the second path 1152 may be connected to each other. The guide protrusion 1141 of the brush 1140, which is described below, may move between the first path 1151 and the second path 1152 through a connected portion. For example, one end portion 1151a of the first path 1151 may be connected to one end portion 1152a of the second path 1152. For example, the other end portion 1151b of the first path 1151 may be connected to the other end portion 1152b of the second path 1152.

According to an example embodiment, the driver 1120 may be disposed to rotate the brush 1140. In the disclosure, the brush 1140 may be rotated due to the rotation of the motor included in the driver 1120. For example, the rotational power of the driver 1120 may be directly transferred to the brush 1140. Here, the direct transfer of the rotational power may not only mean that the driver 1120 and the brush 1140 are directly coupled to each other but may also mean that the rotational power is transferred so that the angle at which the motor of the driver 1120 rotates and the angle at which the brush 1140 rotates are substantially the same even if the motor of the driver 520 is indirectly coupled to each other.

According to an example embodiment, the shaft 1130 may be configured to connect the driver 1120 and the brush 1140. The shaft 1130 may be coupled to the rotation shaft of the driver 1120 and may be coupled to the brush 1140 through the shaft through hole 1112 of the case 1110. The shaft 1130 may be coupled to the brush 1140 by being inserted into a shaft hole 1142 of the brush 1140 to be described below.

According to an example embodiment, the brush 1140 may be disposed to rotate between the first position and the second position. The brush 1140 may be configured to sweep (e.g., remove or clean) the lint attached to the filter member 12 by rotating about the rotational axis. The brush 1140 may be configured so that the tip portion 1140a rotates along the inner circumferential surface of the filter member 12. While the brush 1140 is rotated, the tip portion 1140a of the brush 1140 may be positioned adjacent to the inner circumferential surface of the filter member 12 to clean the lint attached to the filter member 12. Here, the rotational axis of the brush 1140 may be the same axis as the rotational axis of the shaft 1130. Here, the first position may refer to a position before the brush 1140 starts cleaning the lint. Here, the second position may refer to a position where the brush 1140 is rotated from the first position to finish cleaning the lint attached to the filter member 12.

The brush 1140 may be rotated in a reciprocating manner between the first position and the second position. When the motor of the driver 1120 rotates in the first rotation direction (e.g., the forward direction or the clockwise direction), the brush 1140 may rotate in a direction from the first position to the second position. While the brush 1140 is rotated from the first position to the second position, the tip portion 1140a may be disposed adjacent to the filter member 12. For example, when the motor of the driver 1120 rotates in the first rotation direction, the brush 1140 may also rotate in the first rotation direction. The brush 1140 may move from the first position to the second position to clean the lint on the filter member 12.

If the motor of the driver 1120 rotates in the second rotation direction (e.g., a reverse direction or a counterclockwise direction) opposite to the first rotation direction, the brush 1140 may rotate from the second position toward the first position. For example, when the motor of the driver 1120 rotates in the second rotation direction, the brush 1140 may also rotate in the second rotation direction. However, the disclosure is not limited thereto, and the rotation direction of the motor of the driver 1120 and the rotation direction of the brush 1140 may be opposite to those illustrated. The brush 1140 may be referred to as a 'wiper', a 'scraper', or a 'blade'.

According to an reciprocating embodiment, the brush 1140 may include an elastomer 1143 formed of an elastic or rubber material. The elastomer 1143 may be disposed on the tip portion 1140a of the brush 1140. The elastomer 1143 may be a portion positioned adjacent to the inner circumferential surface of the filter member 12 while the brush 1140 is rotated. The tip portion 1140a of the brush 1140 may be formed of the elastomer 1143 so that the filter member 12 may be prevented from being damaged when the brush 1140 rotates.

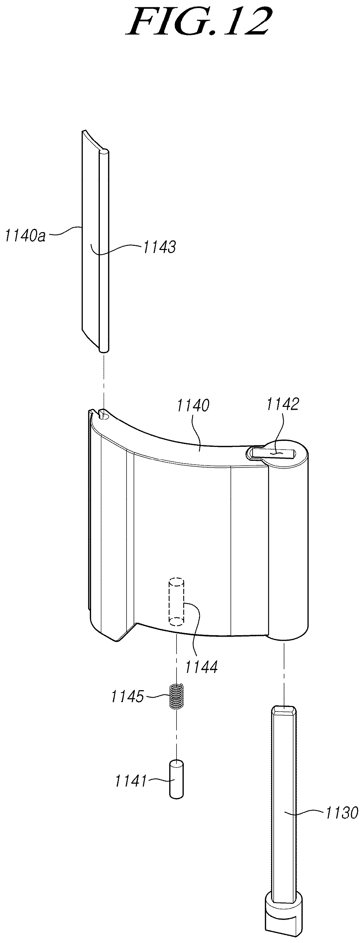

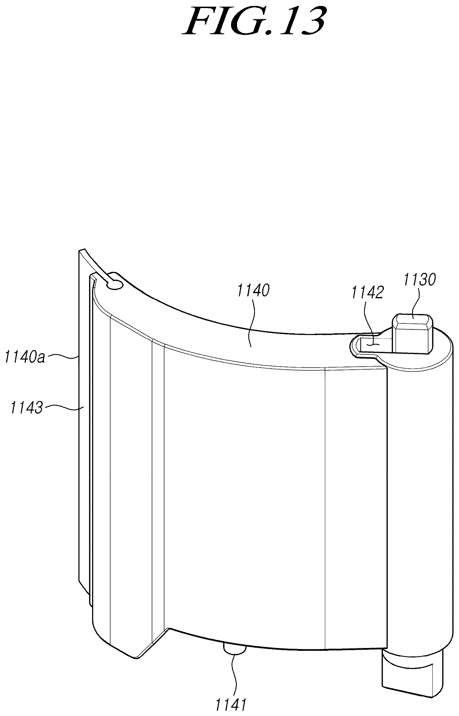

FIG. 12 is an exploded perspective view illustrating the brush and the shaft illustrated in FIG. 11. FIG. 13 is a view illustrating the brush and the shaft of FIG. 11.

The brush 1140 and the shaft 1130 illustrated in FIG. 12 and FIG. 13 may be substantially the same as or similar to the brush 1140 and the shaft 1130 illustrated in FIG. 11. The brush 1140 and the shaft 1130 illustrated in FIG. 12 and FIG. 13 may be included in the lint cleaning device 1100 illustrated in FIG. 11.

Referring to FIG. 12 and FIG. 13, the brush 1140 may include a guide protrusion 1141 inserted to at least partially protrude from a lateral side thereof. At least a portion of the guide protrusion 1141 may be inserted into a recess 1144 formed in a lateral side of the brush 1140. When the brush 1140 is rotated, the guide protrusion 1141 may be moved along the path formed by the guide rail (e.g., the guide rail 1150 of FIG. 11) of the case (e.g., the case 1110 of FIG. 11).

According to an example embodiment, while the brush 1140 is rotated from the second position to the first position, the tip portion 1140a may be disposed to be spaced apart from the filter member (e.g., the filter member 12 of FIG. 2). For example, while the brush 1140 is rotated from the second position to the first position, the guide protrusion 1141 may be moved to the second path 1152 having a smaller swing radius than the first path 1151. Accordingly, the brush 1140 may be rotated while being spaced apart from the filter member 12.

According to an example embodiment, the brush 1140 may include the shaft hole 1142. The shaft 1130 may be inserted into the shaft hole 1142 to form a rotational axis. The brush 1140 may rotate between the first position and the second position using the shaft 1130 as a rotational axis.

According to an example embodiment, the shaft hole 1142 may be formed so that the shaft 1130 is relatively movable in the shaft hole 1142. The shaft 1130 may be inserted to be movable within the shaft hole 1142. The shaft hole 1142 may be configured so that the shaft 1130 is movable in one direction within the shaft hole 1142. For example, the shaft hole 1142 may be configured so that the shaft 1130 is relatively movable in the radial direction of the filter member 12 disposed in the arc shape. The brush 1140 may be moved in one direction while the shaft 1130 is fixed. From a relative perspective with respect to the brush 1140, the shaft 1130 may move in one direction in the shaft hole 1142.

According to an example embodiment, if the shaft 1130 is relatively moved in the shaft hole 1142, the rotational axis or the rotation radius of the brush 1140 may be changed. According to an embodiment, the lint cleaning device 1100 may be configured so that the rotational axis or the rotation radius of the brush 1140 varies according to the relative position of the shaft 1130 with respect to the shaft hole 1142 in the shaft hole 1142. The shaft 1130 may be fixedly disposed, and the brush 1140 may be configured to be movable by an additional space disposed in the shaft hole 1142. From a relative point of view, the shaft 1130 may be moved with respect to the brush 1140. In the shaft hole 1142, as the shaft 1130 is positioned relatively adjacent to the tip portion 1140a of the brush 1140, the swing radius of the brush 1140 may decrease. In the shaft hole 1142, as the shaft 1130 is positioned relatively far from the tip portion 1140a of the brush 1140, the swing radius of the brush 1140 may increase.

According to an example embodiment, the rotation radius of the brush 1140, when the brush 1140 is rotated from the first position to the second position, may be larger than the rotation radius of the brush 1140 when the brush 1140 is rotated from the second position to the first position. While the brush 1140 is rotated from the first position to the second position, the guide protrusion 1141 of the brush 1140 moves along the first path 1151 of the guide rail 1150, and while the brush 1140 is rotated from the second position to the first position, the guide protrusion 1141 of the brush 1140 moves along the second path 1152 positioned radially inside the first path 1151 of the guide rail 1150, and thus there may be a difference in swing radius.

According to an example embodiment, in response to the guide protrusion 1141 of the brush 1140 moving from the first path 1151 to the second path 1152, the rotational axis or the rotation radius of the brush 1140 may be changed. For example, if the guide protrusion 1141 moves from the first path 1151 to the second path 1152 in a state in which the brush 1140 is adjacent to the second position, the rotational axis or the rotation radius of the brush 1140 may be changed. If the guide protrusion 1141 of the brush 1140 moves from the first path 1151 to the second path 1152, the rotation radius of the brush 1140 may be reduced. Since the rotation radius of the brush 1140 is reduced, the tip portion 1140a of the brush 1140 may be spaced apart from the filter member 12. In other words, if the guide protrusion 1141 of the brush 1140 moves along the second path 1152, the brush 1140 may be spaced apart from the filter member 12, thereby preventing the lint remaining on the surface of the filter member 12 from being swept away in the reverse direction.

According to an example embodiment, in response to the guide protrusion 1141 of the brush 1140 moving from the second path 1152 to the first path 1151, the rotational axis or the rotation radius of the brush 1140 may be changed. For example, if the guide protrusion 1141 moves from the second path 1152 to the first path 1151 in a state in which the brush 1140 is adjacent to the first position, the rotational axis or the rotation radius of the brush 1140 may be changed. If the guide protrusion 1141 of the brush 1140 moves from the second path 1152 to the first path 1151, the tip portion 1140a of the brush 1140 may be disposed adjacent to the filter member 12. In other words, if the guide protrusion 1141 of the brush 1140 moves along the first path 1151, the brush 1140 may sweep (e.g., clean or remove) the lint attached or filtered to the surface of the filter member 12.

According to an example embodiment, the brush 1140 may include a spring 1145. The spring 1145 may be disposed in the inner space of the guide protrusion 1141 in the recess 1144 formed in the lateral side of the brush 1140. The spring 1145 may be compressed in the recess 1144 formed in the lateral side of the brush 1140 by the guide protrusion 1141. The spring 1145 may be disposed to apply an elastic force outward of the guide protrusion 1141. When the brush 1140 is mounted or provided in the case 1110, the guide protrusion 1141 is disposed on the guide rail 1150 of the case 1110, and the brush 1140 may be configured so that the guide protrusion 1141 presses on the guide rail 1150 of the case 1110 by the spring 1145. For example, the brush 1140 may be configured so that the guide protrusion 1141 presses (or press down) on the bottom surface of the guide rail 1150 by the elastic force of the spring 1145.

According to an example embodiment, a horizontal cross-sectional area of the shaft 1130 may be smaller than a horizontal cross-sectional area of the shaft hole 1142. Due to the difference in the horizontal cross-sectional area between the shaft 1130 and the shaft hole 1142, the brush 1140 may be coupled to the shaft 1130 to be movable with respect to the shaft 1130. It may be coupled with the shaft 1130 so that the shaft 1130 is relatively movable with respect to the brush 1140. The horizontal cross section of the shaft 1130 may have a substantially elongated shape. However, the disclosure is not limited thereto, and the horizontal cross section of the shaft 1130 may have, e.g., a substantially circular shape, an oval shape, or a rectangular shape. The horizontal cross section of the shaft hole 1142 may have a substantially elongated shape. However, the disclosure is not limited thereto, and the horizontal cross section of the shaft hole 1142 may have, e.g., a substantially oval shape or a rectangular shape.

FIG. 14 is a view illustrating an example guide rail structure of a lint cleaning device according to an embodiment.

The case 1110 illustrated in FIG. 14 may be substantially the same as or similar to the case 1110 illustrated in FIG. 11 and FIG. 12. The case 1110 illustrated in FIG. 14 may be included in the lint cleaning device 1100 of FIG. 11 and FIG. 12.

Referring to FIG. 14, the guide rail 1150 may include a first connecting portion 1153 and a second connecting portion 1154. The guide protrusion (e.g., the guide protrusion 1141 of FIG. 12) of the brush (e.g., the brush 1140 of FIG. 12) may move between the first path 1151 and the second path 1152 of the guide rail 1150 through the first connecting portion 1153 or the second connecting portion 1154.

The first connecting portion 1153 may be a portion where the first path 1151 and the second path 1152 are connected in a state in which the brush 1140 is disposed adjacent to the first position. The first connecting portion 1153 may be a portion where one end portion 1151a of the first path 1151 is connected to one end portion 1152a of the second path 1152.

The second connecting portion 1154 may be a portion where the first path 1151 and the second path 1152 are connected in a state in which the brush 1140 is disposed adjacent to the second position. The second connecting portion 1154 may be a portion where the other end portion 1151b of the first path 1151 is connected to the other end portion 1152b of the second path 1152. The other end portion 1151b of the first path 1151 may refer to an opposite end portion of the one end portion 1151a of the first path 1151. The other end portion 1152b of the second path 1152 may refer to an opposite end portion of the one end portion 1152a of the second path 1152.

According to an example embodiment, in the first connecting portion 1153 of the guide rail 1150, a first step 1155 may be formed at a boundary, dividing the first path 1151 and the second path 1152. In the first connecting portion 1153, the second path 1152 may be formed to be stepped further upward than the first path 1151. The one end portion 1152a of the second path 1152 may be formed to be stepped further upward than the one end portion 1151a of the first path 1151. Here, 'stepped upward' may denote stepping upward in a direction toward the brush 1140.

According to an example embodiment, if the guide protrusion 1141 of the brush 1140 moves along the guide rail 1150, the first connecting portion 1153 may move from the second path 1152 to the first path 1151. Due to the step formed in the first connecting portion 1153, the guide protrusion 1141 may move only in one direction. Since the guide protrusion 1141 presses (or presses down) on the bottom surface of the guide rail 1150 by a spring (e.g., the spring 1145 of FIG. 12) as described above, the guide protrusion 1141 may move only in one direction.

According to an example embodiment, in the second connecting portion 1154 of the guide rail 1150, a second step 1156 may be formed at a boundary dividing the first path 1151 and the second path 1152. In the second connecting portion 1154, the first path 1151 may be formed to be stepped further upward than the second path 1152. The other end portion 1151b of the first path 1151 may be formed to be stepped further upward than the other end portion 1152b of the second path 1152. Here, 'stepped upward' may denote stepping upward in a direction toward the brush 1140.

When the guide protrusion 1141 of the brush 1140 moves along the guide rail 1150, the second connecting portion 1154 may move from the first path 1151 to the second path 1152. Due to the step formed in the second connecting portion 1154, the guide protrusion 1141 may move only in one direction. Since the guide protrusion 1141 presses (or presses down) on the bottom surface of the guide rail 1150 by a spring (e.g., the spring 1145 of FIG. 12) as described above, the guide protrusion 1141 may move only in one direction.

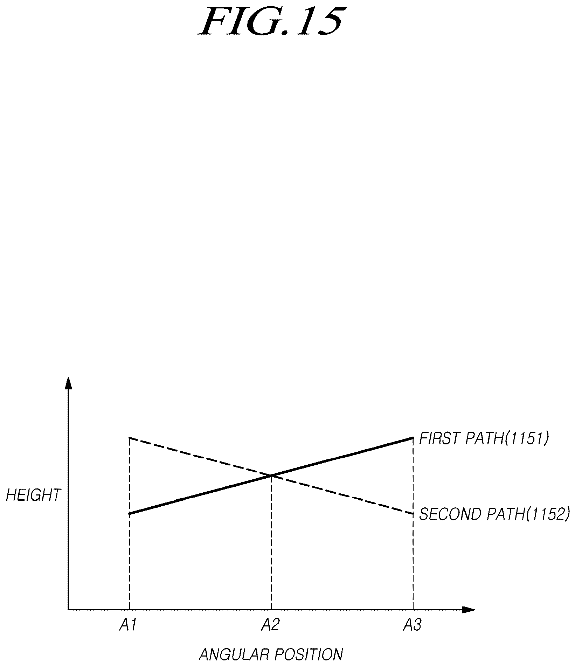

FIG. 15 is a graph illustrating an example inclined structure of a guide rail of a lint cleaning device according to an embodiment.

The graph of FIG. 15 is a graph for describing an inclined structure of the guide rail 1150.

Referring to FIG. 15, heights of the first path 1151 and the second path 1152 of the guide rail 1150 are illustrated. Here, the heights of the first path 1151 and the second path 1152 may refer to the thickness of the case 1110 with respect to the corresponding position.

According to an example embodiment, the first path 1151 may be formed to be inclined upward, along a direction in which the brush 1140 moves, from the first position to the second position. For example, the first path 1151 may be formed to increase in height, along a direction in which the brush 1140 moves, from the first position to the second position. For example, the first path 1151 may be formed to be inclined to approach the brush 1140 as the brush 1140 moves from the first position to the second position.

According to an example embodiment, the second path 1152 may be formed to be inclined upward, along a direction in which the brush 1140 moves, from the second position to the first position. For example, the second path 1152 may be formed to increase in height, along a direction in which the brush 1140 moves, from the second position to the first position. For example, the second path 1152 may be formed to be inclined to approach the brush 1140 as the brush 1140 moves from the second position to the first position.

As illustrated, the first path 1151 and the second path 1152 may be formed to be inclined upward in different directions, thereby forming a difference in step size between the first connecting portion (e.g., the first connecting portion 1153 of FIG. 14) and the second connecting portion (e.g., the second connecting portion 1154 of FIG. 14).

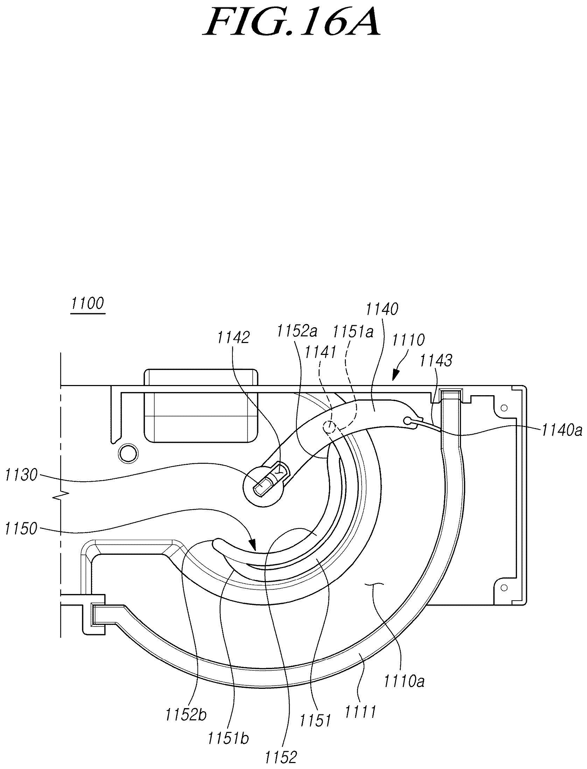

FIG. 16A to FIG. 16D are views illustrating example operations of a lint cleaning device according to an embodiment.

The lint cleaning device 1100 and components thereof illustrated in FIG. 16A to FIG. 16D may be substantially the same as or similar to the lint cleaning device 1100 and components thereof illustrated in FIG. 11 to FIG. 15. Hereinafter, the same reference numerals will be assigned to components that are substantially the same as or similar to the components described with reference to FIG. 11 to FIG. 15.

FIG. 16A illustrates a state when the brush 1140 is in a first position. When the brush 1140 is in the first position, the guide protrusion 1141 of the brush 1140 may be positioned on the first path 1151 of the guide rail 1150. For example, the guide protrusion 1141 may be positioned at one end portion 1151a of the first path 1151. The guide protrusion 1141 may not be moved to the second path 1152 due to a step formed at a boundary between one end portion 1151a of the first path 1151 and one end portion of the second path 1152. When the brush 1140 is in the first position, the shaft 1130 may be disposed in the shaft hole 1142 to be adjacent to the opposite end portion of the tip portion 1140a of the brush 1140.

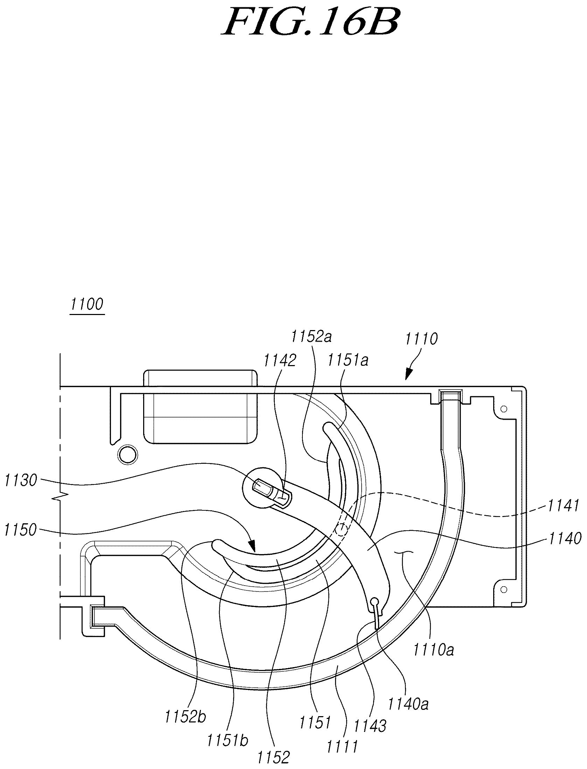

FIG. 16B illustrates an example operation in which the lint cleaning device 1100 rotates the brush 1140 to clean the lint attached to the filter member 12. While the brush 1140 is rotated in the first rotation direction, the lint attached to the filter member 12 may be swept away (e.g., cleaned or removed). The motor of the driver (e.g., the driver 1120 of FIG. 11) may operate to rotate the brush 1140. As the motor of the driver 1120 rotates in the first rotation direction, the shaft 1130 may be rotated in the first rotation direction, and the brush 1140 coupled to the shaft 1130 may be rotated in the first rotation direction. Here, the first rotation direction may refer to a clockwise direction in the drawings. While the brush 1140 is rotated in the first rotation direction, the guide protrusion 1141 may move along the first path 1151 of the guide rail 1150.

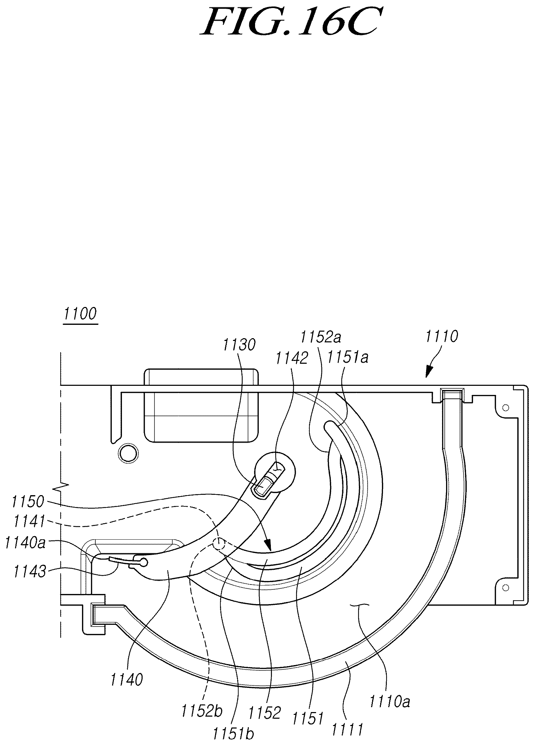

FIG. 16C illustrates a state in which the brush 1140 reaches a second position. While the brush 1140 moves from the first position to the second position, the lint attached to the surface of the filter member 12 may be cleaned. The lint swept by the rotation of the brush 1140 may be moved to a separate lint receiving box (not shown) when the brush 1140 reaches the second position. When the brush 1140 reaches the second position, the guide protrusion 1141 may be moved from the first path 1151 to the second path 1152 of the guide rail 1150. When the guide protrusion 1141 is moved from the first path 1151 to the second path 1152, the brush 1140 may be moved so that the shaft 1130 approaches a direction relatively close to the tip portion 1140a of the brush 1140 in the shaft hole 1142. Accordingly, the rotation radius of the brush 1140 may be reduced.

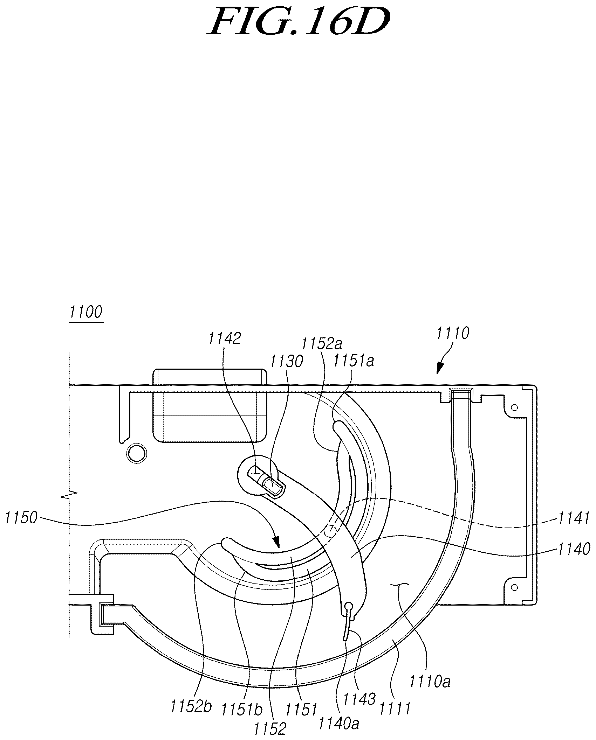

FIG. 16D illustrates an example operation in which the lint cleaning device 1100 rotates the brush 1140 from the second position to the first position after cleaning. The motor of the driver 1120 may operate to rotate the brush 1140. As the motor of the driver 1120 rotates in the second rotation direction opposite to the first rotation direction, the brush 1140 may be rotated in the second rotation direction. Here, the second rotation direction may refer to a counterclockwise direction in the drawings. While the brush 1140 is rotated in the second rotation direction, the guide protrusion 1141 may be moved along the second path 1152 of the guide rail 1150. Accordingly, since the rotation radius of the brush 1140 is reduced, the tip portion 1140a of the brush 1140 may be disposed to be spaced apart from the filter member 12 while the brush 1140 is rotated in the second rotation direction. By spacing the brush 1140 apart from the filter member 12 while the brush 1140 is rotated in the second rotation direction, it is possible to prevent the lint remaining on the surface of the filter member 12 from being swept in the reverse direction along the tip portion of the brush 1140 returning after cleaning.

When the brush 1140 reaches the first position in FIG. 16D, the brush 1140 returns to the state of FIG. 16A. For example, as the guide protrusion 1141 moves from the second path 1152 to the first path 1151, when the brush 1140 reaches the first position, the brush 1140 may return to the state of FIG. 16A.

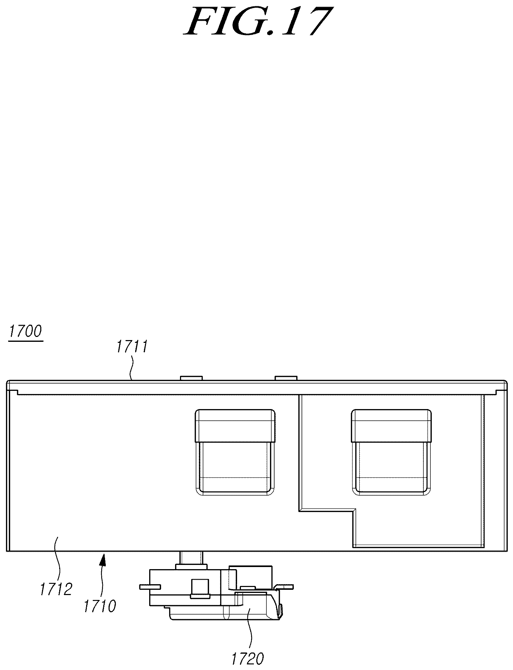

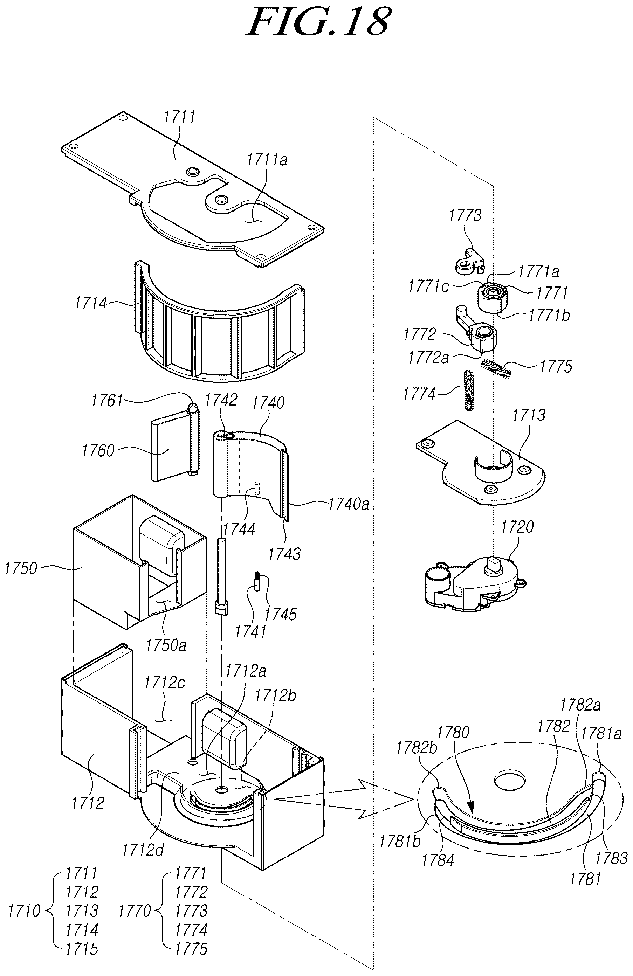

FIG. 17 is a perspective view illustrating an example lint cleaning device according to an embodiment. FIG. 18 is an exploded perspective view illustrating an example lint cleaning device according to an embodiment.

The lint cleaning device 1700 illustrated in FIG. 17 and FIG. 18 may be substantially the same as or similar to the lint cleaning device 90 of the clothing treatment device 1 illustrated in FIG. 1 and FIG. 2. The lint cleaning device 1700 illustrated in FIG. 17 and FIG. 18 may be included in the clothing treatment device 1 illustrated in FIG. 1 and FIG. 2.

The lint cleaning device 1700 illustrated in FIG. 17 and FIG. 18 may be an embodiment in which the technical features of the lint cleaning device 500 described above with reference to FIG. 5 to FIG. 10D and the technical features of the lint cleaning device 1100 described above with reference to FIG. 11 to FIG. 16D are merged.

The lint cleaning device 1700 illustrated in FIG. 17 and FIG. 18 may be mounted or provided in a clothes dryer as illustrated in FIG. 4A and FIG. 4B, but the clothing treatment device 1 described in the disclosure is not limited to the clothes dryer. In other words, the lint cleaning device 1700 illustrated in FIG. 17 and FIG. 18 may include or be disposed in any device including a heat exchanger for receiving clothes to be dried in a specific space and drying and heating humid air exhausted from the specific space.

According to an example embodiment, the lint cleaning device 1700 may be modularized. The lint cleaning device 1700 may be disposed under the clothes receiving unit (e.g., the drum 20 of FIG. 2) of the clothing treatment device (e.g., the clothing treatment device 1 of FIG. 4A) and may be modularized to be slidable in or out. For example, the components other than a driver 1720 of the lint cleaning device 1700 may be modularized to detachably mounted or provided in the clothing treatment device 1.

Referring to FIG. 17 and FIG. 18, the lint cleaning device 1700 may include all or some of a case 1710, the driver 1720, a shaft 1730, a brush 1740, a lint chamber 1750, an chamber door 1760, or an operation assembly 1770. The lint cleaning device 1700 may automatically clean or remove the lint accumulated on the surface of the filter member 12 while the air, including the lint, passes through the filter member (e.g., the filter member 12 of FIG. 2) during the drying cycle of the clothing treatment device (e.g., the clothing treatment device 1 of FIG. 1). The lint cleaning device 1700 may be coupled to the filter member 12 to clean or remove the lint filtered on the surface of the filter member 12. When the cleaned lint is received in the lint chamber 1750 and the lint fills the lint chamber 1750, the clothing treatment device 1 may detect whether the lint chamber 1750 is full.

According to an example embodiment, the case 1710 may form an outer appearance of the lint cleaning device 1700. The case 1710 may include a receiving space for placing components such as the brush 1740, the lint chamber 1750, the operation assembly 1770, and the chamber door 1760 therein. For example, in the case 1710, a first space 1712a in which the brush 1740 rotates to clean the lint may be formed. For example, a separate second space 1712b in which the operation assembly 1770 is received may be formed in the case 1710. For example, the first space 1712a in which the brush 1740 is received and the second space 1712b in which the operation assembly 1770 is received may be spatially separated (e.g., separated by a partition wall).

The case 1710 may form a third space 1712c to receive the lint chamber 1750. The third space 1712c may be a space connected to the first space 1712a. The third space 1712c may be spatially separated from the second space 1712b. The lint chamber 1750 may be detachably received in the third space 1712c.

According to an example embodiment, the case 1710 may include a filter mounting portion 1714 or a shaft through hole 1715.

The filter mounting portion 1714 may be a portion disposed to mount the filter member 12. The filter mounting portion 1714 may be disposed along a moving direction of the tip portion 1740a of the brush 1740 described below. The filter mounting portion 1714 may be opened for air to enter or penetrate. The filter member 12 may be mounted or provided outside or inside the filter mounting portion 1714. For example, the filter mounting portion 1714 may have an arc-shaped cross section. The filter mounting portion 1714 may be integrally formed with the case 1710, but is not limited thereto, and may be configured so that a separate component is coupled to the case 1710.

The shaft through hole 1715 may be a portion through which the shaft 1730 to be coupled to the brush 1740 passes. The shaft through hole 1715 may be formed to penetrate, e.g., a partition wall between the first space 1712a and the second space 1712b.

According to an example embodiment, the case 1710 may include an upper case 1711, a body case 1712, and a lower case 1713. The upper case 1711 is a portion forming the upper surface of the case 1710 and may be detachably coupled to the body case 1712. An opening 1711a may be formed in the upper case 1711. Air may be circulated through the opening 1711a of the upper case 1711. For example, air including lint introduced through an inlet flow path (e.g., the inlet flow path 51 of FIG. 2) of the clothing treatment device (e.g., the clothing treatment device 1 of FIG. 2) may be introduced into the lint cleaning device 1700 through the opening 1711a. The introduced air may pass through the filter member 12 to filter lint. Unlike shown, the upper case 1711 and the body case 1712 may be integrally formed.

The body case 1712 may be configured to define the first space 1712a, the second space 1712b, and the third space 1712c. For example, the second space 1712b may be positioned between the body case 1712 and the lower case 1713.

According to an example embodiment, the case 1710 may include a guide rail 1780. The guide rail 1780 illustrated in FIG. 17 and FIG. 18 may be substantially the same as or similar to the guide rail 1150 illustrated in FIG. 11 to FIG. 15. The guide rail 1150 illustrated in FIG. 11 to FIG. 15 may also be applied to the guide rail 1780 of FIG. 17 and FIG. 18.

The guide rail 1780 may be formed on a wall surface 1712d of the case 1710. The guide rail 1780 may be formed, e.g., in the form of a groove dug in the wall surface 1712d of the case 1710.

The guide rail 1780 may be formed within a moving range in which the brush 1740 moves between a first position and a second position to be described below. The guide rail 1780 may be formed on a partition wall between the first space 1712a and the second space 1712b. For example, the guide rail 1780 may be formed on a partition wall between the first space 1712a and the second space 1712b toward the first space 1712a. The guide rail 1780 may be configured so that a guide protrusion 1741 of the brush 1740 to be described below is inserted into the guide rail 1780 to guide the movement path of the guide protrusion 1741.

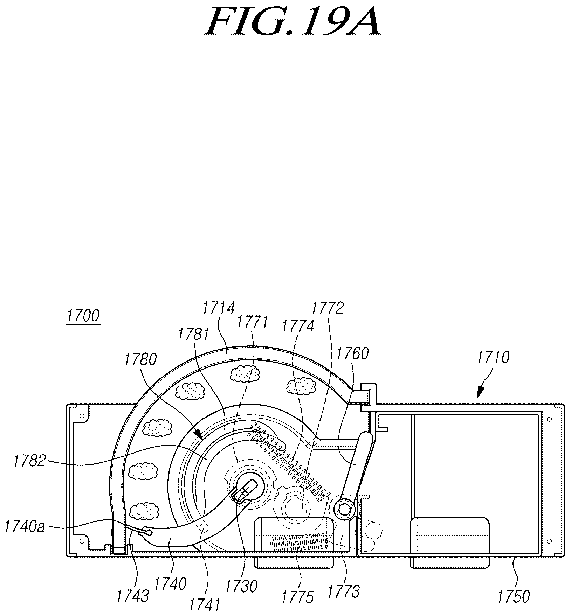

Referring to FIG. 19A to FIG. 19D, the guide rail 1780 may include a first path 1781 and a second path 1782. The first path 1781 may be, e.g., a path for guiding rotation of the brush 1740 when the brush 1740 rotates in a first rotation direction at the first position to be described below. The second path 1782 may be, e.g., a path for guiding rotation of the brush 1740 when the brush 1740 rotates in a second rotation direction at the second position to be described below. Each of the first path 1781 and the second path 1782 may be formed in an arc shape. The brush 1740 may be rotated along the first path 1781 or the second path 1782.

According to an example embodiment, the first path 1781 may be positioned relatively radially outside compared to the second path 1782. The radius of the first path 1781 may be larger than the radius of the second path 1782.

According to an example embodiment, the first path 1781 and the second path 1782 may be connected to each other. The guide protrusion 1741 of the brush 1740, which is described below, may move between the first path 1781 and the second path 1782 through a connected portion. For example, one end portion 1781a of the first path 1781 may be connected to one end portion 1782a of the second path 1782. For example, the other end portion 1781b of the first path 1781 may be connected to the other end portion 1782b of the second path 1782.

According to an example embodiment, the guide rail 1780 may include a first connecting portion 1783 and a second connecting portion 1784. The guide protrusion 1741 of the brush 1740 may move between the first path 1781 and the second path 1782 of the guide rail 1780 through the first connecting portion 1783 or the second connecting portion 1784.

The first connecting portion 1783 may be a portion where the first path 1781 and the second path 1782 are connected in a state in which the brush 1740 is disposed adjacent to the first position. The first connecting portion 1783 may be a portion where one end portion 1781a of the first path 1781 is connected to one end portion 1782a of the second path 1782.

The second connecting portion 1784 may be a portion where the first path 1781 and the second path 1782 are connected in a state in which the brush 1740 is disposed adjacent to the second position. The second connecting portion 1784 may be a portion where the other end portion 1781b of the first path 1781 is connected to the other end portion 1782b of the second path 1782. The other end portion 1781b of the first path 1781 may refer to an opposite end portion of the one end portion 1781a of the first path 1781. The other end portion 1782b of the second path 1782 may refer to an opposite end portion of the one end portion 1782a of the second path 1782.

According to an example embodiment, in the first connecting portion 1783 of the guide rail 1780, a step may be formed at a boundary dividing the first path 1781 and the second path 1782. In the first connecting portion 1783, the second path 1782 may be formed to be stepped further upward than the first path 1781. The one end portion 1782a of the second path 1782 may be formed to be stepped further upward than the one end portion 1781a of the first path 1781. Here, 'stepped upward' may denote stepping upward in a direction toward the brush 1740.

According to an example embodiment, when the guide protrusion 1741 of the brush 1740 moves along the guide rail 1780, the first connecting portion 1783 may move from the second path 1782 to the first path 1781. Due to the step formed in the first connecting portion 1783, the guide protrusion 1741 may be moved only in one direction. Since the guide protrusion 1741 presses (or presses down) on the bottom surface of the guide rail 1780 by a spring 1745 as described above, the guide protrusion 1741 may be moved only in one direction.

According to an example embodiment, in the second connecting portion 1784 of the guide rail 1780, a step may be formed at a boundary dividing the first path 1781 and the second path 1782. In the second connecting portion 1784, the first path 1781 may be formed to be stepped further upward than the second path 1782. The other end portion 1781b of the first path 1781 may be formed to be stepped further upward than the other end portion 1782b of the second path 1782. Here, 'stepped upward' may denote stepping upward in a direction toward the brush 1740.

When the guide protrusion 1741 of the brush 1740 moves along the guide rail 1780, the second connecting portion 1784 may move from the first path 1781 to the second path 1782. Due to the step formed in the second connecting portion 1784, the guide protrusion 1741 may be moved only in one direction. Since the guide protrusion 1741 presses (or presses down) on the bottom surface of the guide rail 1780 by the spring 1745, as described above, the guide protrusion 1741 may be moved only in one direction.

According to an example embodiment, the first path 1781 may be formed to be inclined upward along a direction in which the brush 1740 moves from the first position to the second position. For example, the first path 1781 may be formed to increase in height along a direction in which the brush 1740 moves from the first position to the second position. For example, the first path 1781 may be formed to be inclined to approach the brush 1740 as the brush 1740 moves from the first position to the second position.

According to an example embodiment, the second path 1782 may be formed to be inclined upward along a direction in which the brush 1740 moves from the second position to the first position. For example, the second path 1782 may be formed to increase in height along a direction in which the brush 1740 moves from the second position to the first position. For example, the second path 1782 may be formed to be inclined to approach the brush 1740 as the brush 1740 moves from the second position to the first position.

As illustrated, the first path 1781 and the second path 1782 may be formed to be inclined upward in different directions, thereby forming a difference between the first connecting portion 1783 and the second connecting portion 1784 in different steps.

According to an example embodiment, the driver 1720 may be disposed to rotate the brush 1740 and the chamber door 1760. In the disclosure, an operation structure in which the brush 1740 and the chamber door 1760 are sequentially opened and closed using one driver 1720 may be disposed. The brush 1740 and the chamber door 1760 may be rotated due to the rotation of the motor provided in the driving part 1720. For example, the rotational power of the driver 1720 may be directly transferred to the brush 1740. Here, the direct transfer of the rotational power may not only mean that the driver 1720 and the brush 1740 are directly coupled to each other but may also mean that the rotational power is transferred so that the angle at which the motor of the driver 1720 rotates and the angle at which the brush 1740 rotates are substantially the same even if the motor of the driver 520 is indirectly coupled to each other.

According to an example embodiment, the shaft 1730 may be configured to connect the driver 1720 and the brush 1740. The shaft 1730 may be coupled to the rotation shaft of the driver 1720, and may be coupled to the brush 1740 through the shaft through hole 1715 of the case 1710. The shaft 1730 may be coupled to the brush 1740 by being inserted into the shaft hole 1742 of the brush 1740 to be described below.

According to an example embodiment, the brush 1740 may be disposed to rotate between the first position and the second position about. The brush 1740 illustrated in FIG. 17 and FIG. 18 may be substantially the same as or similar to the brush 1140 illustrated in FIG. 11 to FIG. 13. The description of the brush 1140 illustrated in FIG. 11 to FIG. 13 may also be applied to the brush 1740 of FIG. 17 and FIG. 18.

The brush 1740 may be configured to sweep (e.g., clean or remove) the lint attached to the filter member 12 by rotating about the rotational axis. The brush 1740 may be configured so that the tip portion 1740a rotates along the inner circumferential surface of the filter member 12. While the brush 1740 is rotated, the tip portion 1740a of the brush 1740 may be disposed adjacent to the inner circumferential surface of the filter member 12 to clean the lint attached to the filter member 12. Here, the rotational axis of the brush 1740 may be the same axis as the rotational axis of the shaft 1730. Here, the first position may refer to a position before the brush 1740 starts cleaning the lint. Here, the second position may refer to a position where the brush 1740 is rotated from the first position to finish cleaning the lint attached to the filter member 12. The second position may be a position relatively closer to the chamber door 1760 than the first position. The second position may be a position relatively closer to the lint chamber 1750 than the first position.

The brush 1740 may be rotated in a reciprocating manner between the first position and the second position. For example, if the motor of the driver 1720 rotates in the first rotation direction (e.g., the forward direction or the clockwise direction), the brush 1740 may rotate in a direction from the first position to the second position. For example, if the motor of the driver 1720 rotates in the first rotation direction, the brush 1740 may also rotate in the first rotation direction. The brush 1740 may move from the first position to the second position to clean (or remove) the lint on the filter member 12, and when reaching the second position, send the lint to the lint chamber 1750.

When the motor of the driver 1720 rotates in the second rotation direction (e.g., a reverse direction or a counterclockwise direction) opposite to the first rotation direction, the brush 1740 may rotate from the second position toward the first position. For example, if the motor of the driver 1720 rotates in the second rotation direction, the brush 1740 may also rotate in the second rotation direction. However, the disclosure is not limited thereto, and the rotation direction of the motor of the driver 1720 and the rotation direction of the brush 1740 may be opposite to those illustrated. The brush 1740 may be referred to as a 'wiper', a 'scraper', or a 'blade'.

According to an example embodiment, the brush 1740 may include an elastomer 1743 formed of an elastic or rubber material. The elastomer 1743 may be disposed on the tip portion 1740a of the brush 1740. The elastomer 1743 may be a portion positioned adjacent to the inner circumferential surface of the filter member 12 while the brush 1740 is rotated. The tip portion 1740a of the brush 1740 may be formed of an elastomer 1743, so that the filter member 12 may be prevented from being damaged when the brush 1740 rotates.

According to an example embodiment, the brush 1740 may include a guide protrusion 1741 inserted to at least partially protrude from a lateral side thereof. At least a portion of the guide protrusion 1741 may be inserted into a recess 1744 formed in a lateral side of the brush 1740. If the brush 1740 is rotated, the guide protrusion 1741 may be moved along a path formed by the guide rail 1780 of the case 1710.

According to an example embodiment, the tip portion 1740a may be spaced apart from the filter member 12 while the brush 1740 is rotated from the second position to the first position. For example, while the brush 1740 is rotated from the second position to the first position, the guide protrusion 1741 may be moved to the second path 1782 having a smaller swing radius than the first path 1781. Accordingly, the brush 1740 may be rotated while being spaced apart from the filter member 12.

According to an example embodiment, the brush 1740 may include a shaft hole 1742. The shaft 1730 may be inserted into the shaft hole 1742 to form a rotational axis. The brush 1740 may rotate between the first position and the second position using the shaft 1730 as a rotational axis.

According to an example embodiment, the shaft hole 1742 may be formed so that the shaft 1730 is relatively movable in the shaft hole 1742. The shaft 1730 may be inserted to be movable within the shaft hole 1742. The shaft hole 1742 may be configured so that the shaft 1730 is movable in one direction within the shaft hole 1742. For example, the shaft hole 1742 may be configured so that the shaft 1730 is relatively movable in the radial direction of a filter member (e.g., the filter member 12 of FIG. 2) disposed in an arc shape. The brush 1740 may be moved in one direction while the shaft 1730 is fixed. From a relative perspective with respect to the brush 1740, the shaft 1730 may move in one direction in the shaft hole 1742.

According to an example embodiment, when the shaft 1730 is relatively moved in the shaft hole 1742, the rotational axis or the rotation radius of the brush 1740 may be changed. According to an example embodiment, the lint cleaning device 1700 may be configured so that the rotational axis or the rotation radius of the brush 1740 varies according to the relative position of the shaft 1730 with respect to the shaft hole 1742 in the shaft hole 1742. The shaft 1730 may be fixedly disposed, and the brush 1740 may be configured to be movable by an additional space disposed in the shaft hole 1742. From a relative point of view, the shaft 1730 may be moved with respect to the brush 1740. In the shaft hole 1742, as the shaft 1730 is positioned relatively adjacent to the tip portion 1740a of the brush 1740, the swing radius of the brush 1740 may decrease. In the shaft hole 1742, as the shaft 1730 is positioned relatively far from the tip portion 1740a of the brush 1740, the swing radius of the brush 1740 may increase.

According to an example embodiment, the rotation radius of the brush 1740 when the brush 1140 is rotated from the first position to the second position may be larger than the rotation radius of the brush 1140 when the brush 1140 is rotated from the second position to the first position. While the brush 1740 is rotated from the first position to the second position, the guide protrusion 1741 of the brush 1740 may move along the first path 1781 of the guide rail 1780, and while the brush 1740 is rotated from the second position to the first position, the guide protrusion 1741 of the brush 1740 may move along the second path 1782 positioned radially inside the first path 1781 of the guide rail 1780, and thus there may be a difference in swing radius.

According to an example embodiment, in response to the guide protrusion 1741 of the brush 1740 moving from the first path 1781 to the second path 1782, the rotational axis or the rotation radius of the brush 1740 may be changed. For example, when the guide protrusion 1741 moves from the first path 1781 to the second path 1782 in a state in which the brush 1740 is disposed adjacent to the second position, the rotational axis or the rotation radius of the brush 1740 may be changed. When the guide protrusion 1741 of the brush 1740 moves from the first path 1781 to the second path 1782, the rotation radius of the brush 1740 may be reduced. Since the rotation radius of the brush 1740 is reduced, the tip portion 1740a of the brush 1740 may be spaced apart from the filter member 12. In other words, when the guide protrusion 1741 of the brush 1740 moves along the second path 1782, the brush 1740 may be spaced apart from the filter member 12, thereby preventing the lint remaining on the surface of the filter member 12 from being swept away or removed in the reverse direction.

According to an example embodiment, in response to the guide protrusion 1741 of the brush 1740 moving from the second path 1782 to the first path 1781, the rotational axis or the rotation radius of the brush 1740 may be changed. For example, when the guide protrusion 1741 moves from the second path 1782 to the first path 1781 in a state in which the brush 1740 is disposed adjacent to the first position, the rotational axis or the rotation radius of the brush 1740 may be changed. When the guide protrusion 1741 of the brush 1740 moves from the second path 1782 to the first path 1781, the tip portion 1740a of the brush 1740 may be adjacent to the filter member 12. In other words, when the guide protrusion 1741 of the brush 1740 moves along the first path 1781, the brush 1740 may sweep the lint attached or filtered to the surface of the filter member 12.

According to an example embodiment, the brush 1740 may include the spring 1745. The spring 1745 may be disposed in the inner space of the guide protrusion 1741 in the recess 1744 formed in a lateral side of the brush 1740. The spring 1745 may be compressed in the recess 1744 formed in the lateral side of the brush 1740 by the guide protrusion 1741. The spring 1745 may be disposed to apply an elastic force outward of the guide protrusion 1741. If the brush 1740 is mounted or provided in the case 1710, the guide protrusion 1741 is disposed on the guide rail 1780 of the case 1710, and the brush 1740 may be configured so that the guide protrusion 1741 presses on the guide rail 1780 of the case 1710 by the spring 1745. For example, the brush 1740 may be configured so that the guide protrusion 1741 presses (or presses down) on the bottom surface of the guide rail 1780 by the elastic force of the spring 1745.

According to an example embodiment, a horizontal cross-sectional area of the shaft 1730 may be smaller than a horizontal cross-sectional area of the shaft hole 1742. Due to the difference in the horizontal cross-sectional area between the shaft 1730 and the shaft hole 1742, the brush 1740 may be coupled to the shaft 1730 to be movable with respect to the shaft 1730. It may be coupled with the shaft 1730 so that the shaft 1730 is relatively movable with respect to the brush 1740. The horizontal cross section of the shaft 1730 may have a substantially elongated shape. However, the disclosure is not limited thereto, and the horizontal cross section of the shaft 1730 may have, e.g., a substantially circular shape, an oval shape, or a rectangular shape. The horizontal cross section of the shaft hole 1742 may have a substantially elongated shape. However, the disclosure is not limited thereto, and the horizontal cross section of the shaft hole 1742 may have, e.g., a substantially oval shape or a rectangular shape.

According to an example embodiment, the lint chamber 1750 may be disposed to receive the lint removed by the brush 1740. The lint swept or removed by the rotation of the brush 1740 may be moved to the lint chamber 1750.

According to an example embodiment, the lint chamber 1750 may include a lint inlet 1750a. The lint swept by the rotation of the brush 1740 may be received in the lint chamber 1750 through the lint inlet 1750a. The lint inlet 1750a may be positioned between the first space 1712a and the third space 1712c of the case 1710 while the lint chamber 1750 is mounted in the case 1710.

The lint chamber 1750 may be received in the third space 1712c of the case 1710. The lint chamber 1750 may be slid in or out from the case 1710. If the lint chamber 1750 is filled (e.g., partially or entirely full) with lint, the user may simply separate only the lint chamber 1750 to remove the lint.

According to an example embodiment, the chamber door 1760 may be disposed to open or close the lint chamber 1750. The chamber door 1760 may be mounted in the case 1710. The chamber door 1760 may be disposed to open or close a portion of the case 1710 connected between the first space 1712a and the third space 1712c. If the chamber door 1760 is opened, the chamber door 560 may be opened by moving it toward the brush 1740. For example, if the chamber door 1760 is opened, the chamber door 560 may be opened by moving it toward the first space 1712a. The chamber door 1760 may open/close the lint chamber 1750 by receiving power from the driver 1720 by the operation assembly 1770 to be described below. The chamber door 1760 may be referred to as an opening/closing plate. The chamber door 1760 may separate the space in which the brush 1740 cleans the lint from the space in the lint chamber 1750, thereby preventing the lint in the lint chamber 1750 from flowing back into the first space 1712a in which the brush 1740 is received and contaminating the inside.

According to an example embodiment, the chamber door 1760 may include a rotation shaft 1761. The rotation shaft 1761 of the chamber door 1760 may be fixed by the case 1710 for other movements than rotation. For example, the rotation shaft of the chamber door 1760 may be rotatably coupled to the upper case 1711 and the body case 1712.

According to an example embodiment, the operation assembly 1770 may be configured to move the chamber door 1760 in response to the operation of the driver. The operation assembly 1770 illustrated in FIG. 17 and FIG. 18 may be substantially the same as or similar to the operation assembly 570 illustrated in FIG. 5 to FIG. 10D. The description of the operation assembly 570 illustrated in FIG. 5 to FIG. 10D may also be applied to the operation assembly 1770 of FIG. 17 and FIG. 18.

The operation assembly 1770 may be received in the second space 1712b of the case 1710. The operation assembly 1770 may be configured so that the moving direction of the chamber door 1760 varies according to the rotation direction of the driver 1720 motor. For example, if the motor of the driver 1720 rotates in the first rotation direction, the chamber door 1760 may open the lint chamber 1750. For example, if the motor of the driver 1720 rotates in the second rotation direction, the chamber door 1760 may close the lint chamber 1750.

According to an example embodiment, the operation assembly 1770 may include a cam 1771 coupled to the driver 1720, a lever 1772 configured to rotate in response to rotation of the cam 1771, and a latch 1773 configured to rotate in response to rotation of the lever 1772. Each of the cam 1771, the lever 1772, and the latch 1773 may be received in the second space 1712b of the case 1710.

The cam 1771 may be rotatably coupled to the driver 1720. The cam 1771 may be coupled to, e.g., the rotation shaft of the driver 1720 motor and may be rotated according to the operation of the motor. The cam 1771 may be disposed between the shaft 1730 and the driver 1720.

According to an example embodiment, the cam 1771 may include a first pressing protrusion 1771a, a second pressing protrusion 1771b spaced apart from the first pressing protrusion 1771a in the circumferential direction, and a recess 1771c formed between the first pressing protrusion 1771a and the second pressing protrusion 1771b. The first pressing protrusion 1771a may rotate the lever 1772 by pressing the lever 1772. The second pressing protrusion 1771b may rotate the lever 1772 by pressing the lever 1772.

The first pressing protrusion 1771a and the second pressing protrusion 1771b may have substantially the same radius but are not limited thereto. The first pressing protrusion 1771a and the second pressing protrusion 1771b may protrude to be spaced apart from the rotation shaft by substantially the same distance. The first pressing protrusion 1771a may protrude while maintaining a constant radius along the circumferential direction but is not limited thereto. The second pressing protrusion 1771b may protrude while maintaining a constant radius along the circumferential direction but is not limited thereto.

A circumferential length of the first pressing protrusion 1771a may be shorter than a circumferential length of the second pressing protrusion 1771b as illustrated. However, the disclosure is not limited thereto, and the circumferential length of the first pressing protrusion 1771a may be equal to or larger than the circumferential length of the second pressing protrusion 1771b, unlike illustrated.

According to an example embodiment, the recess 1771c may be formed between the first pressing protrusion 1771a and the second pressing protrusion 1771b. The radius of the recess 1771c may be smaller than the radius of the first pressing protrusion 1771a or the radius of the second pressing protrusion 1771b.

The lever 1772 may include a lever protrusion 1772a formed to protrude toward the cam 1771. The lever protrusion 1772a may be a portion pressed by the first pressing protrusion 1771a or the second pressing protrusion 1771b of the cam 1771. If the lever protrusion 1772a is pressed by the first pressing protrusion 1771a or the second pressing protrusion 1771b of the cam 1771, the lever 1772 may be rotated. If the lever protrusion 1772a is positioned in the recess 1771c of the cam 1771, the lever 1772 may not be pressed by the cam 1771.

If the lever 1772 is pressed by the pressing protrusion 1771a or 1771b of the cam 1771 and rotated in one direction, the latch 1773 coupled to the lever 1772 may be rotated in response thereto.

The latch 1773 may be configured to be rotated in response to the rotation of the lever 1772. The latch 1773 may be configured to open or close the chamber door 1760. The chamber door 1760 may be rotated together according to the rotation of the latch 1773.

The operation assembly 1770 may further include a first spring 1774 disposed between the case 1710 and the lever 1772. The elastic force of the first spring 1774 may apply a force to the lever 1772 in a direction in which the chamber door 1760 is closed by rotation of the lever 1772.

The operation assembly 1770 may further include a second spring 1775 disposed between the case 1710 and the latch 1773. The elastic force of the second spring 1755 may apply a force to the latch 1773 in a direction in which the chamber door 1760 is opened.

According to an example embodiment, the modulus of elasticity of the first spring 1774 may be smaller than the modulus of elasticity of the second spring 1775 but is not limited thereto.

A detailed description of the operation method and process of the operation assembly 1770 will be replaced with the description of FIG. 9A to FIG. 9E.

According to an example embodiment, the lint cleaning device 1700 may include a filter member 12. The filter member 12 may be mounted or provided on the filter mounting portion 1714 of the case 1710. The filter member 12 may have a curved shape. The filter member 12 may have, e.g., a cylindrical shape in which some of the side surfaces are open. The filter member 12 may have, e.g., an arc shape. However, the disclosure is not limited thereto, and the filter member 12 may be omitted from the lint cleaning device 1700 and may be separately provided and mounted on the filter mounting portion 1714.

According to an example embodiment, the clothing treatment device (e.g., the clothing treatment device 1 of FIG. 1) may further include a sensor (not shown) configured to detect whether the lint chamber is filled with lint.

For example, the sensor may be a current sensor that detects the current flowing through the motor of the driver 1720. If the lint chamber 1750 is filled with lint, a greater force may be required to close the chamber door 1760 by the reaction force of the lint. As a larger force is required, a larger load may be generated on the motor. The clothing treatment device 1 may estimate the load of the motor of the driver 1720 based on the current value sensed by the current sensor, and if the load of the motor exceeds a set value, the clothing treatment device 1 may determine that the lint chamber 1750 is full.

For example, the sensor may be a reed switch. If the reed switch is used as a sensor, a magnetic force forming means may be disposed in a portion of the chamber door 1760. The reed switch may be coupled to the case 1710 to sense a magnetic force forming means in a state in which the chamber door 1760 is closed. If the reed switch detects the magnetic force forming means, the clothing treatment device 1 may determine that the chamber door 1760 is closed. If the lint chamber 1750 is filled with lint, the chamber door 1760 may not be completely closed by the pressure of the lint. In this case, since the magnetic force forming means is not detected by the reed switch, the clothing treatment device 1 may determine that the lint chamber 1750 is filled with lint. The magnetic force forming means may include, e.g., a general magnet or an electromagnet, but is not limited thereto. The reed switch may sense the magnetic force forming means.

FIG. 19A to FIG. 19D are views illustrating example operations of a lint cleaning device according to an embodiment.

The lint cleaning device 1700 and components thereof illustrated in FIG. 19A to FIG. 19D may be substantially the same as or similar to the lint cleaning device 1700 and components thereof illustrated in FIG. 17 and FIG.18. Hereinafter, the same reference numerals will be assigned to components that are substantially the same as or similar to those described with reference to FIG. 17 and FIG.18.

FIG. 19A to FIG. 19D illustrate an organic operation process of the brush 1740 and the chamber door 1760 by the operation of the driver 1720 in the lint cleaning device 1700. A description of the operation process of the operation assembly 1770 in the operation process of the lint cleaning device 1700 illustrated in FIG. 19A to FIG. 19D will be replaced with the description of FIG. 9A to FIG. 9E.

FIG. 19A illustrates a state where the brush 1740 is in a first position. If the brush 1740 is in the first position, the chamber door 1760 may separate the space between the first space 1712a and the lint chamber 1750 in the closed state. FIG. 19A may be a state in which the lint cleaning device 1700 is maintained when cleaning of the lint attached to the filter member 12 is not performed. If the brush 1740 is in the first state, the operation assembly 1770 may maintain the state illustrated in FIG. 9A.

FIG. 19A illustrates a state where the brush 1740 is in a first position. If the brush 1740 is in the first position, the guide protrusion 1741 of the brush 1740 may be positioned on the first path 1781 of the guide rail 1780. For example, the guide protrusion 1741 may be positioned at one end portion 1781a of the first path 1781. The guide protrusion 1741 may not be moved to the second path 1782 due to a step formed at a boundary between the one end portion 1781a of the first path 1781 and the one end portion 1782a of the second path 1782. If the brush 1740 is in the first position, the shaft 1730 may be disposed in the shaft hole 1742 to be disposed adjacent to the opposite end portion of the tip portion 1740a of the brush 1740.

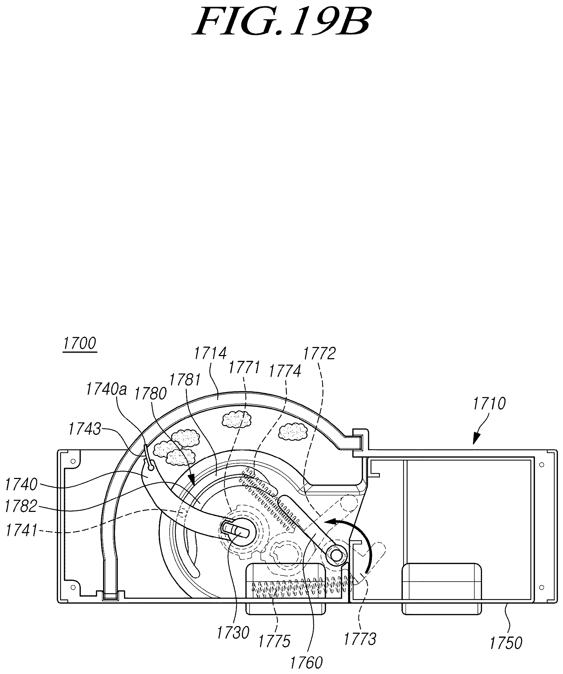

FIG. 19B illustrates an initial operation in which the lint cleaning device 1700 is configured to rotate the brush 1740 to clean the lint attached to the filter member 12. The motor of the driver (e.g., the driver 1720 of FIG. 17) may operate to rotate the brush 1740 and the cam 1771. As the driver 1720 motor rotates in the first rotation direction, the brush 1740 and the cam 1771 may rotate in the first rotation direction. While the brush 1740 is rotated in the first rotation direction, the lint attached to the filter member 12 may be swept away (e.g., cleaned or removed). Here, the first rotation direction may refer to a clockwise direction in the drawings. The chamber door 1760 may be opened in advance before the brush 1740 reaches the second position. For example, as illustrated in FIG. 19B, because the lever 1772 is pressed by the second pressing protrusion 1771b of the cam 1771, the chamber door 1760 is opened, the chamber door 1760 may be opened before the brush 1740 reaches the second position. The chamber door 1760 may be opened by the latch 1773 rotated in response to rotation of the cam 1771. The mechanism of the operation assembly 1770 in the state illustrated in FIG. 19B is described in detail with reference to FIG. 9B and FIG. 9C.

FIG. 19B illustrates an operation in which the lint cleaning device 1700 rotates the brush 1740 to clean the lint attached to the filter member 12. While the brush 1740 is rotated in the first rotation direction, the lint attached to the filter member 12 may be swept away (e.g., cleaned or removed). The motor of the driver (e.g., the driver 1720 of FIG. 17) may operate to rotate the brush 1740. As the motor of the driver 1720 rotates in the first rotation direction, the shaft 1730 may be rotated in the first rotation direction, and the brush 1740 coupled to the shaft 1730 may be rotated in the first rotation direction. Here, the first rotation direction may refer to a clockwise direction in the drawings. While the brush 1740 is rotated in the first rotation direction, the guide protrusion 1741 may move along the first path 1781 of the guide rail 1780.

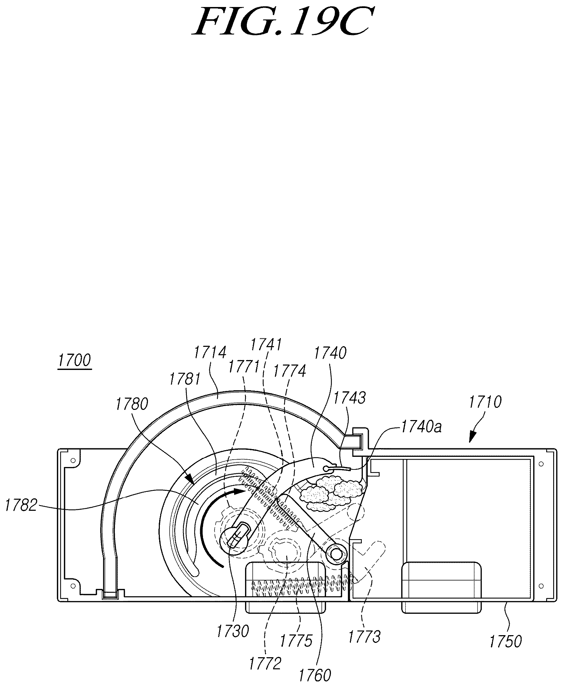

FIG. 19C illustrates a state in which the brush 1740 reaches a second position. While the brush 1740 moves from the first position to the second position, the lint attached to the surface of the filter member 12 may be cleaned. The lint swept or removed by the rotation of the brush 1740 may remain open when the brush 1740 reaches the second position. The lint swept by the brush 1740 may be positioned in a space between the open chamber door 1760 and the lint chamber 1750. The mechanism of the operation assembly 1770 in the state illustrated in FIG. 19C is described in detail with reference to FIG. 9D.

FIG. 19C illustrates a state in which the brush 1740 reaches a second position. While the brush 1740 moves from the first position to the second position, the lint attached to the surface of the filter member 12 may be cleaned. The lint swept by the rotation of the brush 1740 may be moved to a separate lint receiving box (not shown) when the brush 1740 reaches the second position. If the brush 1740 reaches the second position, the guide protrusion 1741 may be moved from the first path 1781 to the second path 1782 of the guide rail 1780. If the guide protrusion 1741 is moved from the first path 1781 to the second path 1782, the brush 1740 may be moved so that the shaft 1730 approaches a direction relatively close to the tip portion 1740a of the brush 1740 in the shaft hole 1742. Accordingly, the rotation radius of the brush 1740 may be reduced.

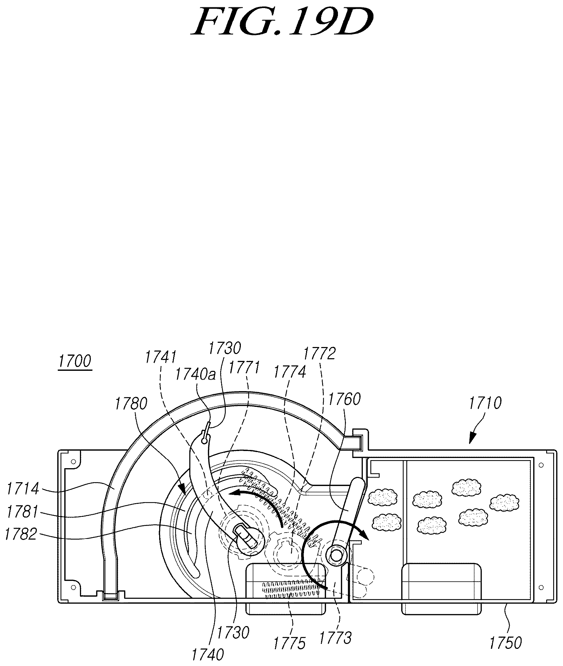

FIG. 19D illustrates an operation in which the lint cleaning device 1700 rotates the brush 1740 from the second position to the first position after cleaning. The motor of the driver 1720 may operate to rotate the brush 1740 and the cam 1771. As the motor of the driver 1720 rotates in the second rotation direction opposite to the first rotation direction, the brush 1740 and the cam 1771 may rotate in the second rotation direction. Here, the second rotation direction may refer to a counterclockwise direction in the drawings. The chamber door 1760 may be closed before the brush 1740 reaches the first position. For example, as illustrated in FIG. 9E, because the lever 1772 is pressed by the second pressing protrusion 1771b of the cam 1771, the chamber door 1760 is closed, the chamber door 1760 may be closed before the brush 1740 reaches the first position. For example, when the brush 1740 starts to rotate in the second rotation direction at the second position, the chamber door 1760 may close the lint chamber 1750. For example, when the brush 1740 is still positioned near the second position, the chamber door 1760 may close the lint chamber 1750. By spatially separating the space in which the brush 1740 moves from the lint chamber 1750, it is possible to prevent the lint received in the lint chamber 1750 from being discharged back to the first space 1712a. The chamber door 1760 may be opened by the latch 1773 rotated in response to rotation of the cam 1771. The mechanism of the operation assembly 1770 in the state illustrated in FIG. 19D is described in detail with reference to FIG. 9E.

FIG. 19D illustrates an operation in which the lint cleaning device 1700 rotates the brush 1740 from the second position to the first position after cleaning. The motor of the driver 1720 may operate to rotate the brush 1740. As the motor of the driver 1720 rotates in the second rotation direction opposite to the first rotation direction, the brush 1740 may be rotated in the second rotation direction. Here, the second rotation direction may refer to a counterclockwise direction in the drawings. While the brush 1740 is rotated in the second rotation direction, the guide protrusion 1741 may be moved along the second path 1782 of the guide rail 1780. Accordingly, since the rotation radius of the brush 1740 is reduced, the tip portion 1740a of the brush 1740 may be spaced apart from the filter member 12 while the brush 1740 is rotated in the second rotation direction. By spacing the brush 1740 apart from the filter member 12 while the brush 1740 is rotated in the second rotation direction, it is possible to prevent the lint remaining on the surface of the filter member 12 from being swept (e.g., removed) in the reverse direction along the tip portion of the brush 1740 returning after cleaning.

If the brush 1740 reaches the first position in FIG. 19D, the brush 1140 returns to the state of FIG. 19A. For example, as the guide protrusion 1741 moves from the second path 1782 to the first path 1781, if the brush 1740 reaches the first position, the brush 1140 may return to the state of FIG. 19A.

The lint cleaning device 1700 may include the operation assembly 1770 as described above and may organically control the operation of the brush 1740 and the chamber door 1760 using one driver 1720 (or actuator). By minimizing the number of the drivers 1720, the lint cleaning device 1700 may minimize the volume occupied by the lint cleaning device 1700 in the limited inner space of the clothing treatment device (e.g., the clothing treatment device 1 of FIG. 1) and reduce the production cost.

The terms as used herein are provided merely to describe some embodiments thereof but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments but should rather be appreciated as covering all various modifications, equivalents, and/or substitutes of various embodiments.

## Claims

1. A clothing treatment device, comprising:
a clothes receiving unit (20) for receiving clothes; and
a lint cleaning device (500, 1700) configured to couple with a filter member (12) and configured to clean lint filtered on a surface of the filter member (12),
wherein the lint cleaning device (500, 1700) includes a brush (540, 1740) disposed so that a tip portion of the brush (540, 1740) rotates between a first position and a second position along an inner circumferential surface of the filter member (12), a lint chamber (550, 1750) disposed to receive the lint removed by the brush (540, 1740), an chamber door (560, 1760) disposed to open or close the lint chamber (550, 1750), a driver (520, 1720) configured to rotate the brush (540, 1740), and an operation assembly (570, 1770) configured to move the chamber door (560, 1760) in response to an operation of the driver (520, 1720).

2. The clothing treatment device of claim 1, wherein
the operation assembly (570, 1770) includes:
a cam (571, 1771) coupled to the driver (520, 1720) and including:
a first pressing protrusion (5711, 1771a),
a second pressing protrusion (5712, 1771b) spaced apart from the first pressing protrusion (5711, 1771a) in a circumferential direction, and
a recess (5713, 1771c) between the first pressing protrusion (5711, 1771a) and the second pressing protrusion (5712, 1771b),
a lever (572, 1772) including a lever protrusion (5721, 1772a) protruding radially outward and rotated as the lever protrusion (5721, 1772a) is pressed by the first pressing protrusion (5711, 1771a) or the second pressing protrusion during movement of the cam, (5712, 1771b); and
a latch (573, 1773) configured to rotate in response to rotation of the lever (572, 1772) to thereby rotate the chamber door (560, 1760) to open and close the lint chamber (550, 1750).

3. The clothing treatment device of claim 2, wherein
the lever protrusion (5721, 1772a) of the lever (572, 1772) is configured to be positioned on the first pressing protrusion (5711, 1771a) when the brush (540, 1740) is at the first position.

4. The clothing treatment device of claim 2 or 3, wherein
when the driver (520, 1720) is rotated in a first direction so that the brush (540, 1740) is rotated from the first position to the second position, the lever (572, 1772) is rotated in a second direction opposite to the first direction as the lever protrusion (5721, 1772a) of the lever (572, 1772) passes through the recess (5713, 1771c) and is pressed by the second pressing protrusion (5712, 1771b), and
the latch (573, 1773) is configured to rotate in response to the rotation of the lever (572, 1772) to thereby rotate the chamber door (560, 1760) to open the lint chamber (550, 1750).

5. The clothing treatment device of any one of claims 2 to 4, wherein
when the driver (520, 1720) is rotated in a second direction so that the brush (540, 1740) is rotated from the second position to the first position, the lever (572, 1772) is rotated in a first direction opposite to the second direction as the lever protrusion (5721, 1772a) of the lever (572, 1772) is pressed by the second pressing protrusion, and
the latch (573, 1773) is configured to rotate in response to the rotation of the lever (572, 1772) to thereby rotate the chamber door (560, 1760) to close the lint chamber (550, 1750).

6. The clothing treatment device of any one of claims 2 to 5, wherein
the lint cleaning device (500, 1700) includes a case (510, 1710) configured to receive the brush (540, 1740), the lint chamber (550, 1750), and the chamber door (560, 1760), and
the operation assembly (570, 1770) includes a first spring (574, 1774) disposed between the lever (572, 1772) and the case (510, 1710).

7. The clothing treatment device of claim 6, wherein
the operation assembly (570, 1770) includes a second spring (575, 1775) disposed between the latch (573, 1773) and the case (510, 1710) to apply a force to the latch in a direction in which the chamber door (560, 1760) is rotated to open the lint chamber (550, 1750), and
wherein an elastic modulus of the first spring (574, 1774) is smaller than an elastic modulus of the second spring (575, 1775).

8. The clothing treatment device of any one of claims 2 to 7, wherein
a radius of the first pressing protrusion (5711, 1771a) and a radius of the second pressing protrusion (5712, 1771b) are substantially equal.

9. The clothing treatment device of any one of claims 1 to 8, wherein
the lint cleaning device (500, 1700) is configured to move the lint removed from the filter member (12) toward the lint chamber (550, 1750) as the brush (540, 1740) is rotated from the first position to the second position.

10. The clothing treatment device of claim 9, wherein
the brush (540, 1740) is rotated in a first direction from the first position to the second position, and the chamber door (560, 1760) is rotated to open the lint chamber (550, 1750), in response to rotation of the driver (520, 1720) in the first direction, and
the chamber door (560, 1760) is rotated so that the lint chamber is opened before the brush (540, 1740) reaches the second position.

11. The clothing treatment device of claim 10, wherein
the brush (540, 1740) is rotated in a second direction from the second position to the first position, and the chamber door (560, 1760) is rotated to close the lint chamber, in response to rotation of the driver (520, 1720) in the second direction which is opposite to the first direction, and
the chamber door (560, 1760) is rotated so that the lint chamber (550, 1750) is closed before the brush (540, 1740) reaches the first position.

12. A lint cleaning device (500, 1700) comprising:
a case (510, 1710);
a filter mounting portion configured to mount a filter member (12);
a brush (540, 1740) disposed so that a tip portion of the brush (540, 1740) rotates between a first position and a second position along an inner circumferential surface of the filter member (12) in the case (510, 1710);
a lint chamber (550, 1750) disposed to receive lint removed by the brush (540, 1740);
an chamber door (560, 1760) disposed to open or close the lint chamber (550, 1750);
a driver (520, 1720) configured to rotate the brush (540, 1740) and the chamber door (560, 1760); and
an operation assembly (570, 1770) configured to transfer rotational power to the brush (540, 1740) and the chamber door (560, 1760) in response to an operation of the driver (520, 1720).

13. The lint cleaning device of claim 12, wherein
the driver (520, 1720) includes a driving shaft, and
the operation assembly (570, 1770) includes:
a cam (571, 1771) coupled to the driving shaft, and including:
a first pressing protrusion (5711, 1771a),
a second pressing protrusion (5712, 1771b) spaced apart from the first pressing protrusion (5711, 1771a) in a circumferential direction, and
a recess (5713, 1771c) between the first pressing protrusion (5711, 1771a)
and the second pressing protrusion (5712, 1771b),
a lever (572, 1772) including a lever protrusion (5721, 1772a) protruding radially outward and rotated as the lever protrusion (5721, 1772a) is pressed by the first pressing protrusion (5711, 1771a) or the second pressing protrusion (5712, 1771b) during movement of the cam (571, 1771), and
a latch (573, 1773) configured to rotate in response to rotation of the lever (572, 1772) to thereby rotate the chamber door (560, 1760) to open and close the lint chamber (550, 1750).

14. The lint cleaning device of claim 13, wherein
when the driver (520, 1720) is rotated in a first direction so that the brush (540, 1740) is rotated from the first position to the second position, the lever (572, 1772) is rotated in a second direction opposite to the first direction as the lever protrusion (5721, 1772a) of the lever (572, 1772) passes through the recess (5713, 1771c) and is pressed by the second pressing protrusion (5712, 1771b), and
the latch (573, 1773) is configured to rotate in response to the rotation of the lever (572, 1772) to thereby rotate the chamber door (560, 1760) to open the lint chamber (550, 1750).

15. The lint cleaning device of claim 13 or 14, wherein
when the driver (520, 1720) is rotated in a second direction so that the brush (540, 1740) is rotated from the second position to the first position, the lever (572, 1772) is rotated in a first direction opposite to the second direction as the lever protrusion (5721, 1772a) of the lever (572, 1772) is pressed by the second pressing protrusion, and
the latch (573, 1773) is configured to rotate in response to the rotation of the lever (572, 1772) to thereby rotate the chamber door (560, 1760) to close the lint chamber (550, 1750).
